# EUROPEAN PATENT SPECIFICATION

(11) **EP 3 159 144 B1**
(45) Date of publication and mention of the grant of the patent: **29.12.2021**
(21) Application number: 15886335.7
(22) Date of filing: 24.03.2015
(51) Int. Cl.: B29C 64/386, B29C 67/00

(54) **3D PRINTING SYSTEM, METHOD FOR PRODUCING 3D PRINTED OBJECT, INFORMATION PROCESSING DEVICE, METHOD FOR GENERATING HEAT-DISSIPATING STRUCTURE FOR 3D PRINTED OBJECT, AND PROGRAM FOR GENERATING HEAT-DISSIPATING STRUCTURE FOR 3D PRINTED OBJECT**
3D-DRUCKSYSTEM, VERFAHREN ZUR HERSTELLUNG EINES 3D-DRUCKERZEUGNISSES, INFORMATIONSVERARBEITUNGSVORRICHTUNG, VERFAHREN ZUR ERZEUGUNG EINER WÄRMEABLEITENDEN STRUKTUR FÜR 3D-OBJEKT UND PROGRAMM ZUR ERZEUGUNG EINER WÄRMEABLEITENDEN STRUKTUR FÜR 3D-DRUCKERZEUGNIS
SYSTÈME D'IMPRESSION EN 3D, PROCÉDÉ DE FABRICATION D'UN OBJET IMPRIMÉ EN 3D, DISPOSITIF DE TRAITEMENT D'INFORMATIONS, PROCÉDÉ DE GÉNÉRATION D'UNE STRUCTURE DE DISSIPATION DE CHALEUR POUR OBJET IMPRIMÉ EN 3D ET PROGRAMME DE GÉNÉRATION D'UNE STRUCTURE DE DISSIPATION DE CHALEUR POUR UN OBJET IMPRIMÉ EN 3D

(43) Date of publication of application: 26.04.2017
(73) Proprietor: Technology Research Association for Future Additive Manufacturing, Tokyo 103-0027 (JP)
(72) Inventor: SUGIURA Yukito, Yokohama-shi Kanagawa 222-0033 (JP)
(74) Representative: TBK
(86) International application number: PCT/JP2015/059004
(87) International publication number: WO 2016/151782

(56) References cited:
- EP-A1- 2 022 622
- WO-A1-2012/131481
- WO-A1-2015/019070
- JP-A- 2013 067 117
- None

## Description

### TECHNICAL FIELD

The present invention relates to a technique of generating a structure for heat dissipation of a three-dimensional fabricated object.

### BACKGROUND ART

In the above technical field, patent literature 1 discloses a technique of generating data of a support mesh for supporting a laminated object at the time of laminating and manufacturing a three-dimensional object.

Further prior art is disclosed in document WO 2012/131481 A1, describing a part structure built by metal powder based added manufacturing, as well as in document WO 2015/019070 A1, describing an additive manufacturing method and apparatus, as well as in document EP 2 022 622 A1, describing a support architecture.

### CITATION LIST

### PATENT LITERATURE

Patent literature 1: Japanese Patent No. 5383687

### SUMMARY OF THE INVENTION

### TECHNICAL PROBLEM

The technique described in the above patent literature 1, however, does not mention a method of dissipating generated heat when sintering or coupling small particles of a plastic, metal or ceramic powder into a lump representing a three-dimensional object using a high-power laser, an electron beam, or another focused heat source in selective laser sintering (SLS). As a result, a temperature difference at the time of fabricating and a temperature drop after fabricating cause a distortion, twist, or crack in the shape of a three-dimensional fabricated object. 2. With regard to the further prior art mentioned above, improvements concerning the selection and arrangement of heat dissipation structures are desirable.

The present invention enables to provide a technique of solving the above-described problems.

### SOLUTION TO PROBLEM

To achieve the above objective, aspects of the present invention, according to the independent claims, provide information processing apparatuses, methods for generating a structure for heat dissipation of a three-dimensional fabricated object, and programs for generating a structure for heat dissipation of a three-dimensional fabricated object. Further advantageous developments of the present invention are defined in the corresponding dependent claims.

### ADVANTAGEOUS EFFECTS OF INVENTION

According to the present invention, it is possible to fabricate a desired three-dimensional fabricated object by accelerating heat dissipation of a laminated portion at a time of fabricating the three-dimensional fabricated object.

### BRIEF DESCRIPTION OF DRAWINGS

Fig. 1 is a block diagram showing the arrangement of an information processing apparatus according to an example for better understanding the present invention;
Fig. 2A is a view showing an overview of heat dissipation structural object addition according to the first embodiment of the present invention;
Fig. 2B is a perspective view showing a three-dimensional fabricated object added with heat dissipation structural objects according to the first embodiment of the present invention;
Fig. 3 is a block diagram showing the configuration of a three-dimensional fabricating system including an information processing apparatus according to the first embodiment of the present invention;
Fig. 4 is a block diagram showing the arrangement of a heat dissipation structure model adder according to the first embodiment of the present invention;
Fig. 5A is a table showing the structure of a heat accumulation prediction table according to the first embodiment of the present invention;
Fig. 5B is a table showing the structure of a heat dissipation structure model selection/arrangement table according to the first embodiment of the present invention;
Fig. 5C is a table showing the structure of a heat dissipation structure model database according to the first embodiment of the present invention;
Fig. 6 is a block diagram showing the hardware arrangement of the information processing apparatus according to the first embodiment of the present invention;
Fig. 7A is a flowchart illustrating the three-dimensional fabricated object manufacturing procedure of the three-dimensional fabricating system according to the first embodiment of the present invention;
Fig. 7B is a flowchart illustrating the procedure of the heat dissipation structure model addition processing of the information processing apparatus according to the first embodiment of the present invention;
Fig. 8 is a view showing an overview of heat dissipation structural object addition according to the second embodiment of the present invention;
Fig. 9 is a block diagram showing the arrangement of a heat dissipation structure model adder according to the second embodiment of the present invention;
Fig. 10A is a table showing the structure of a heat accumulation prediction and heat dissipation structure model selection/arrangement table according to the second embodiment of the present invention;
Fig. 10B is a table showing the structure of a heat dissipation structure database according to the second embodiment of the present invention;
Fig. 11 is a block diagram showing the hardware arrangement of an information processing apparatus according to the second embodiment of the present invention;
Fig. 12 is a flowchart illustrating the procedure of the heat dissipation structure model addition processing of the information processing apparatus according to the second embodiment of the present invention;
Fig. 13A is a view showing an overview of heat dissipation structural object addition according to the third embodiment of the present invention;
Fig. 13B is a view showing another overview of heat dissipation structural object addition according to the third embodiment of the present invention;
Fig. 13C is a view showing still other overview of heat dissipation structural object addition according to the third embodiment of the present invention; and
Fig. 14 is a block diagram showing the arrangement of a heat dissipation structure model adder according to the fourth embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [Example]

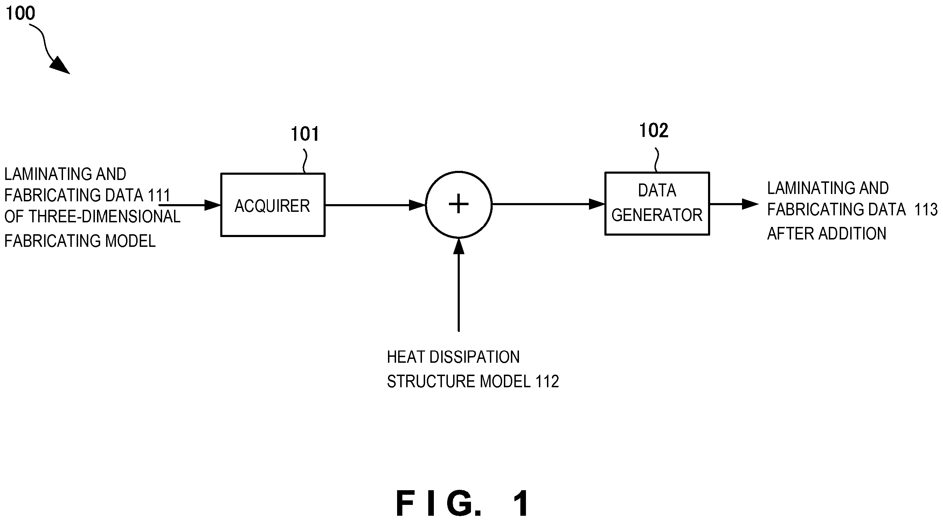

An information processing apparatus 100 according to the example will be described with reference to Fig. 1. The information processing apparatus 100 is an apparatus for generating a structure for heat dissipation of a three-dimensional fabricated object.

As shown in Fig. 1, the information processing apparatus 100 includes an acquirer 101 and a data generator 102. The acquirer 101 acquires laminating and fabricating data 111 of a three-dimensional fabricating model. The data generator 102 generates laminating and fabricating data 113 of a three-dimensional fabricating model added with a heat dissipation structure model 112 for performing heat dissipation from a fabricated portion at the time of laminating and fabricating.

According to this example, it is possible to fabricate a desired three-dimensional fabricated object by accelerating heat dissipation of a laminated portion at the time of fabricating the three-dimensional fabricated object.

### [First Embodiment]

A three-dimensional fabricating system including an information processing apparatus according to the first embodiment of the present invention will be described next. The information processing apparatus according to this embodiment predicts a heat accumulation from a three-dimensional fabricating model to be limited and fabricated, selects a corresponding heat dissipation structure model, and arranges it in a three-dimensional fabricating model. For example, in this embodiment, the heat dissipation structure model is a structural object extending obliquely downward from the laminating and fabricating surface of the three-dimensional fabricating model. The heat dissipation structure model is added to a position at which it can be deleted from a three-dimensional fabricated object after laminating and fabricating.

### «Overview of Heat Dissipation Structural Object Addition»

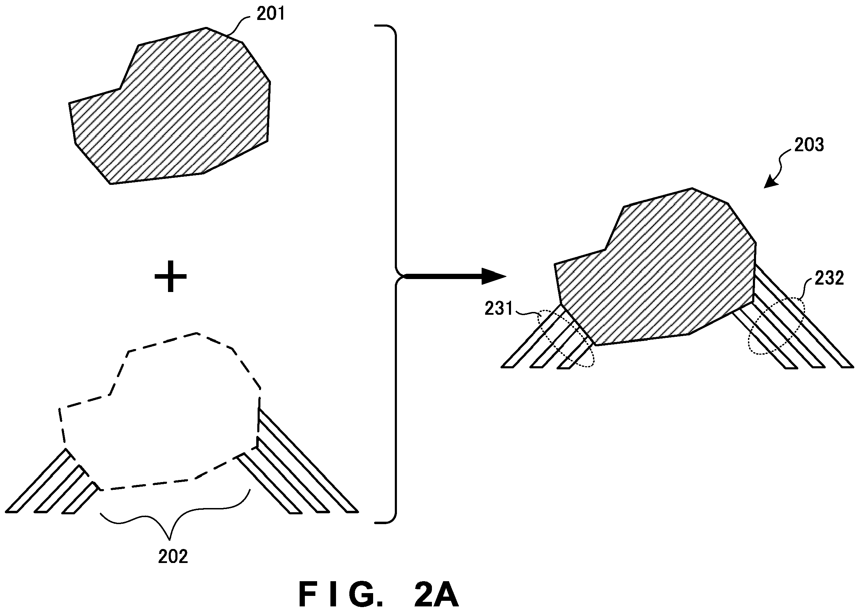

Fig. 2A is a view showing an overview of heat dissipation structural object addition according to this embodiment.

Referring to Fig. 2A, a new three-dimensional fabricating model is generated by adding, to a three-dimensional fabricating model 201, heat dissipation structure models 202 selected in correspondence with heat accumulation prediction at the time of laminating and fabricating the three-dimensional fabricating model 201. Based on the newly generated three-dimensional fabricating model, a three-dimensional fabricated object 203 with heat dissipation structural objects 231 and 232 is laminated and fabricated. Note that although not shown, the heat dissipation structural objects 231 and 232 are deleted from the three-dimensional fabricated object 203. As a more practical example of deletion, the heat dissipation structural objects are deleted by performing a cutting or grinding process by fixing or using a nipper, grinder, sander, or file. Note that a heat dissipation structural object deletion apparatus may be additionally provided.

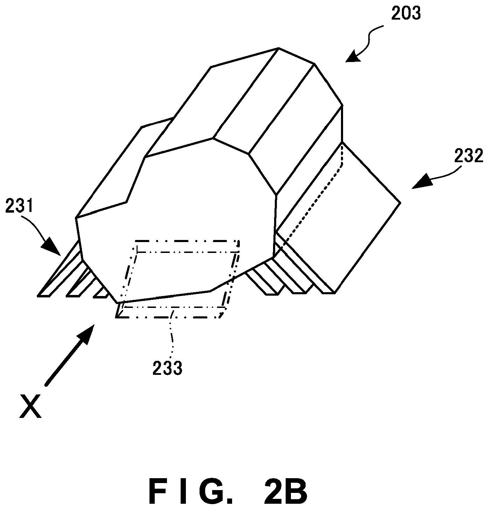

Fig. 2B is a perspective view showing the three-dimensional fabricated object 203 added with the heat dissipation structural objects according to this embodiment. Fig. 2A is a view when viewing Fig. 2B from the X direction.

Fig. 2B shows the heat dissipation structural objects 231 and 232 each having a plate shape but the shape is not limited to this. Various shapes for adjusting heat dissipation efficiency or a temperature drop of a laminated portion can be adopted. Note that a heat dissipation structural object may be added to another surface of the three-dimensional fabricated object, like a heat dissipation structural object 233.

### «Configuration of Three-Dimensional Fabricating System»

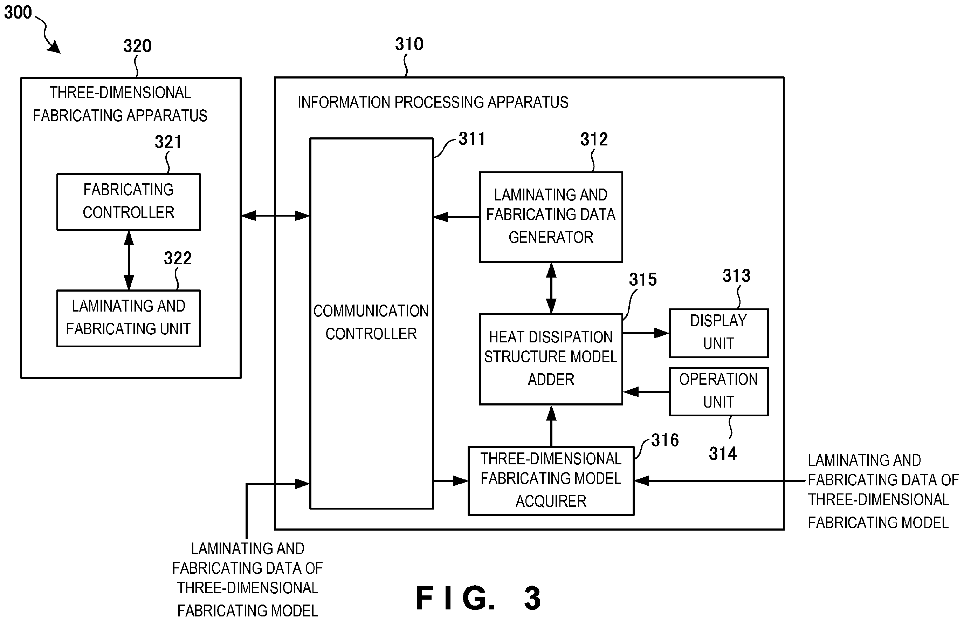

Fig. 3 is a block diagram showing the configuration of a three-dimensional fabricating system 300 including an information processing apparatus 310 according to this embodiment.

The three-dimensional fabricating system 300 includes the information processing apparatus 310 for generating laminating and fabricating data of a three-dimensional fabricating model, and a three-dimensional fabricating apparatus 320 for laminating and fabricating a three-dimensional fabricated object in accordance with the laminating and fabricating data. Note that Fig. 3 shows the configuration in which the information processing apparatus 310 and the three-dimensional fabricating apparatus 320 are connected by communication. However, these apparatuses may be integrated or may be separated into a plurality of apparatuses for respective functions.

The information processing apparatus 310 includes a communication controller 311, a laminating and fabricating data generator 312, a display unit 313, an operation unit 314, a heat dissipation structure model adder 315, and a three-dimensional fabricating model acquirer 316.

The communication controller 311 controls communication with the three-dimensional fabricating apparatus 320, and transmits laminating and fabricating data generated by the laminating and fabricating data generator 312 to the three-dimensional fabricating apparatus 320. If the communication controller 311 receives, via communication, the laminating and fabricating data of a three-dimensional fabricating model to be acquired by the three-dimensional fabricating model acquirer 316, it transfers the received laminating and fabricating data to the three-dimensional fabricating model acquirer 316.

The three-dimensional fabricating model acquirer 316 acquires, via the communication controller 311 or via a bus from a storage medium or the like, the laminating and fabricating data of the three-dimensional fabricating model for laminating and fabricating a three-dimensional fabricated object. Note that the information processing apparatus 310 may have a function of acquiring data representing the three-dimensional fabricated object, and generating laminating and fabricating data of a three-dimensional fabricating model. This processing may be shared with the laminating and fabricating data generator 312.

The display unit 313 displays the three-dimensional fabricating model, a heat dissipation structure model, or the three-dimensional fabricating model added with the heat dissipation structure model, thereby notifying the user of it. The operation unit 314 receives an operation input such as a heat dissipation structure model addition instruction by the user.

The heat dissipation structure model adder 315 selects a heat dissipation structure model in correspondence with heat accumulation prediction at the time of laminating and fabricating the three-dimensional fabricating model acquired by the three-dimensional fabricating model acquirer 316, and arranges it at a predetermined position in the three-dimensional fabricating model. The laminating and fabricating data generator 312 generates new laminating and fabricating data from the three-dimensional fabricating model after addition in which the heat dissipation structure model is arranged. The laminating and fabricating data generator 312 includes a data transmitter for transmitting the new laminating and fabricating data to the three-dimensional fabricating apparatus 320 via the communication controller 311.

The three-dimensional fabricating apparatus 320 includes a fabricating controller 321 and a laminating and fabricating unit 322. The fabricating controller 321 controls laminating and fabricating of a three-dimensional fabricated object by the laminating and fabricating unit 322 in accordance with the laminating and fabricating data of the three-dimensional fabricating model received from the communication controller 311. Under the control of the fabricating controller 321, the laminating and fabricating unit 322 laminates and fabricates the three-dimensional fabricated object by selecting the shape of the three-dimensional fabricated object and melting a granular material, particularly a metal powder by a laser beam, an electron beam, or the like for each lamination. Note that the laminating and fabricating method of the three-dimensional fabricating apparatus 320 is not limited. In this embodiment, any laminating and fabricating method which generates high heat and requires heat dissipation at the time of laminating and fabricating is used.

### (Method of Manufacturing Three-Dimensional Fabricated Object)

In this three-dimensional fabricating system 300, a three-dimensional fabricated object is manufactured in the following steps. In a model generation step, the information processing apparatus 310 or another apparatus generates laminating and fabricating data of a three-dimensional fabricating model from data representing a three-dimensional fabricated object. In a data generation step, the information processing apparatus 310 generates laminating and fabricating data by adding, to the three-dimensional fabricating model, a heat dissipation structure model for performing heat dissipation from a fabricated portion at the time of laminating and fabricating. In a laminating and fabricating step, the three-dimensional fabricating apparatus 320 fabricates the three-dimensional fabricated object added with a heat dissipation structural object in accordance with the laminating and fabricating data generated in the data generation step.

### (Heat Dissipation Structure model Adder)

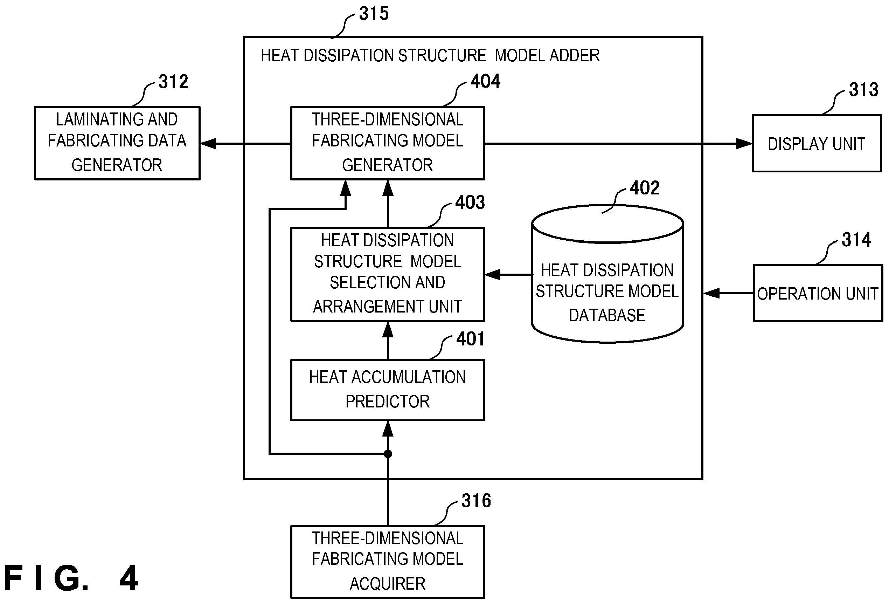

Fig. 4 is a block diagram showing the arrangement of the heat dissipation structure model adder 315 according to this embodiment.

The heat dissipation structure model adder 315 includes a heat accumulation predictor 401, a heat dissipation structure model database 402, a heat dissipation structure model selection and arrangement unit 403, and a three-dimensional fabricating model generator 404. The heat dissipation structure model adder 315 executes heat dissipation structure model addition in accordance with a heat dissipation structure model addition instruction by the operation unit 314.

Note that a material property to be used by the three-dimensional fabricating apparatus 320 or fine parameters to be used for heat accumulation prediction or heat dissipation structure model selection and arrangement may be input from the operation unit 314. Alternatively, if the model of the three-dimensional fabricating apparatus 320 and a material to be used are input, parameters may be set.

The heat accumulation predictor 401 predicts a heat accumulation state in the three-dimensional fabricated object based on the material used by the three-dimensional fabricating apparatus 320 for laminating and fabricating, information about heat at the time of laminating and fabricating, and attributes such as the shape and material property of the three-dimensional fabricating model from the data of the three-dimensional fabricating model transferred from the three-dimensional fabricating model acquirer 316. A laminated portion generates high heat at the time of laminating, and a lump portion in the three-dimensional fabricating model is difficult to dissipate heat, and tends to be a heat accumulation portion. Note that the heat accumulation state is also influenced by the laminating and fabricating speed of the three-dimensional fabricating apparatus 320.

The heat dissipation structure model database 402 stores a heat dissipation structure model to be added in correspondence with heat accumulation prediction of a three-dimensional fabricating model. Note that the heat dissipation structure model database 402 may store each heat dissipation structure model, or a set of a plurality of models in association with the status of heat accumulation prediction. In the example of Fig. 2A, the heat dissipation structure models 202, 231, or 232 including a set of a plurality of models are stored.

The heat dissipation structure model selection and arrangement unit 403 selects a heat dissipation structure model from the heat dissipation structure model database 402 in correspondence with heat accumulation prediction by the heat accumulation predictor 401, and determines an arrangement in the three-dimensional fabricating model.

The three-dimensional fabricating model generator 404 generates a new three-dimensional fabricating model by adding, to the three-dimensional fabricating model, the heat dissipation structure model selected and arranged by the heat dissipation structure model selection and arrangement unit 403. The three-dimensional fabricating model generator 404 outputs data of the three-dimensional fabricating model added with the heat dissipation structure model to the laminating and fabricating data generator 312, and simultaneously outputs the data to the display unit 313 to display it.

### (Heat Accumulation Prediction Table)

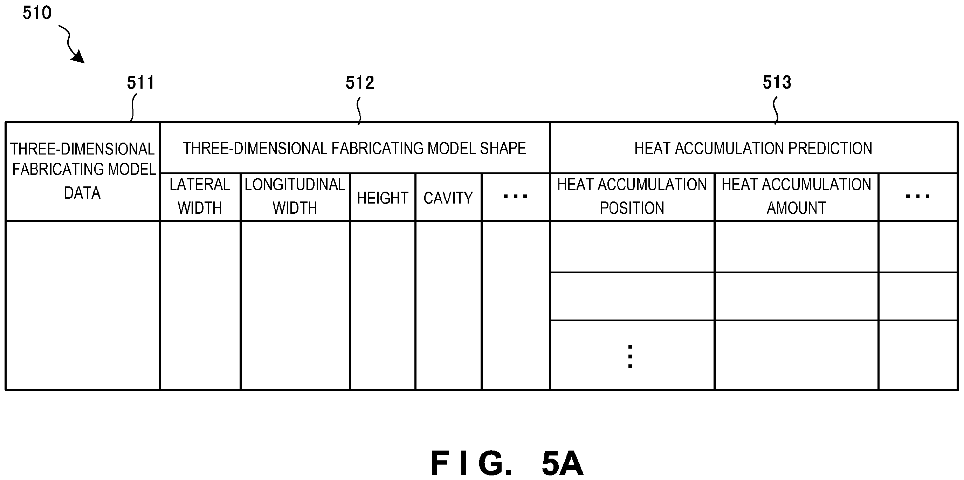

Fig. 5A is a table showing the structure of a heat accumulation prediction table 510 according to this embodiment. The heat accumulation prediction table 510 is used by the heat accumulation predictor 401 to predict a heat accumulation from the data of a three-dimensional fabricating model.

The heat accumulation prediction table 510 stores a three-dimensional fabricating model shape 512 in correspondence with three-dimensional fabricating model data 511. As the three-dimensional fabricating model shape 512, data such as the lateral width, longitudinal width, height, and cavity of a three-dimensional fabricating model is stored. The heat accumulation prediction table 510 stores heat accumulation prediction 513 based on the three-dimensional fabricating model shape 512. The heat accumulation prediction 513 includes a heat accumulation position and heat accumulation amount.

### (Heat Dissipation Structure model Selection/Arrangement Table)

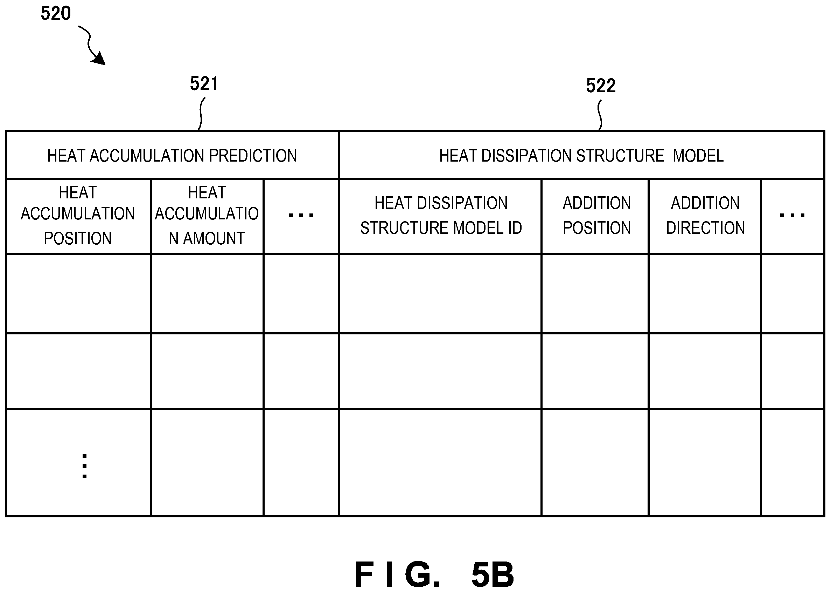

Fig. 5B is a table showing the structure of a heat dissipation structure model selection/arrangement table 520 according to this embodiment. The heat dissipation structure model selection/arrangement table 520 is used by the heat dissipation structure model selection and arrangement unit 403 to select a heat dissipation structure model from the heat dissipation structure model database 402 based on the heat accumulation prediction, and arrange it.

The heat dissipation structure model selection/arrangement table 520 stores a heat dissipation structure model 522 in association with each heat accumulation prediction 521. The heat dissipation structure model 522 includes a heat dissipation structure model ID, addition position, and addition direction.

### (Heat Dissipation Structure model Database)

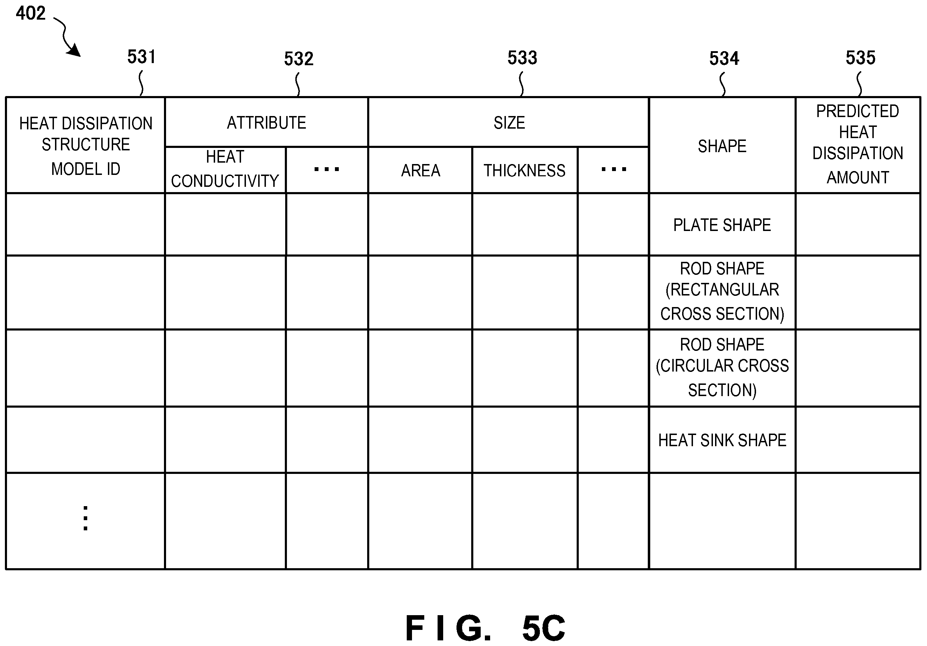

Fig. 5C is a table showing the structure of the heat dissipation structure model database 402 according to this embodiment. Note that the structure of the heat dissipation structure model database 402 is not limited to that shown in Fig. 5C.

The heat dissipation structure model database 402 stores an attribute 532, a size 533, and a shape 534 in association with a heat dissipation structure model ID 531. The heat dissipation structure model database 402 stores a predicted heat dissipation amount 535 calculated based on the attribute 532, size 533, and shape 534. The shape 534 is not limited to those described in Fig. 5C. Various shapes considering a necessary heat dissipation amount or heat dissipation efficiency may be prepared in consideration of the attributes and sizes.

The heat dissipation structure model selection and arrangement unit 403 determines, for example, an appropriate heat dissipation structure model or an appropriate combination of heat dissipation structure models based on the heat accumulation prediction and predicted heat dissipation amount of the above information.

### «Hardware Arrangement of Information Processing Apparatus»

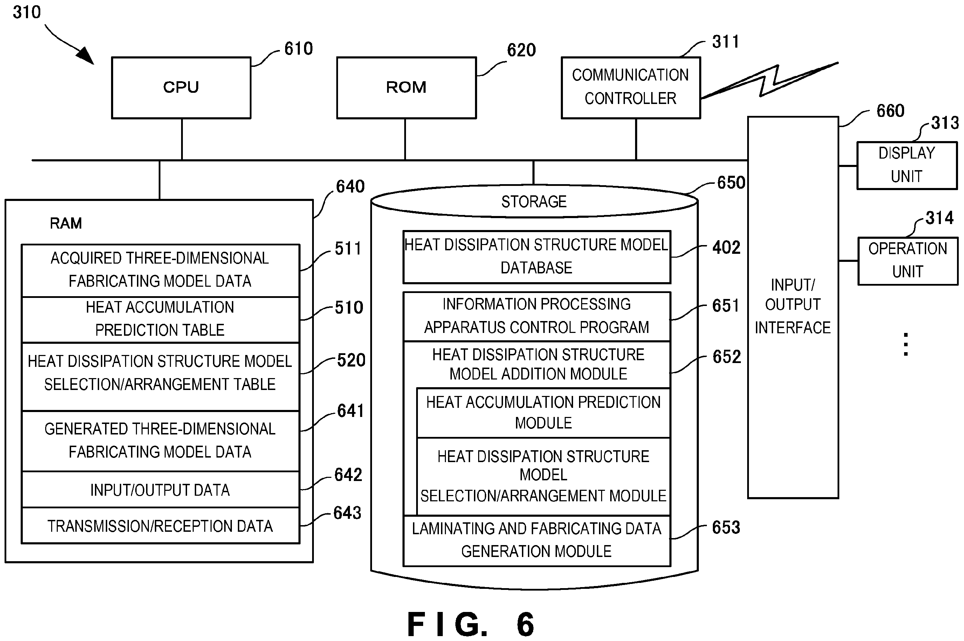

Fig. 6 is a block diagram showing the hardware arrangement of the information processing apparatus 310 according to this embodiment.

Referring to Fig. 6, a CPU (Central Processing Unit) 610 is an arithmetic control processor, and implements the functional components of the information processing apparatus 310 shown in Fig. 3 by executing a program. A ROM (Read Only Memory) 620 stores permanent data such as initial data and a program. A communication controller 311 communicates with the three-dimensional fabricating apparatus 320 via a network. Note that the number of CPUs 610 is not limited to one, and a plurality of CPUs or a GPU (Graphics Processing Unit) for image processing may be included. The communication controller 311 desirably includes a CPU independent of the CPU 610, and writes or reads out transmission/reception data in or from the area of a RAM (Random Access Memory) 640. It is desirable to provide a DMAC (Direct Memory Access Controller) for transferring data between the RAM 640 and a storage 650 (not shown). Furthermore, an input/output interface 660 desirably includes a CPU independent of the CPU 610, and writes or reads out input/output data in or from the area of the RAM 640. Therefore, the CPU 610 processes the data by recognizing that the data has been received by or transferred to the RAM 640. Furthermore, the CPU 610 prepares a processing result in the RAM 640, and delegates succeeding transmission or transfer to the communication controller 311, DMAC, or input/output interface 660.

The RAM 640 is a random access memory used as a temporary storage work area by the CPU 610. An area to store data necessary for implementation of the embodiment is allocated to the RAM 640. The acquired three-dimensional fabricating model data 511 is data of a three-dimensional fabricating model acquired by the information processing apparatus 310. The heat accumulation prediction table 510 is a table used to predict the heat accumulation of the three-dimensional fabricating model. The heat dissipation structure model selection/arrangement table 520 is a table used to select a heat dissipation structure model from the heat dissipation structure model database 402 based on the heat accumulation prediction, and arrange it at an addition position of the three-dimensional fabricating model. Generated three-dimensional fabricating model data 641 is laminating and fabricating data of the three-dimensional fabricating model added with the heat dissipation structure model. Input/output data 642 is data input/output via the input/output interface 660. Transmission/reception data 643 is data transmitted/received via the communication controller 311.

The storage 650 stores a database, various parameters, or the following data or programs necessary for implementation of the embodiment. The heat dissipation structure model database 402 is a database for storing heat dissipation structure models to be searchable. The storage 650 stores the following programs. An information processing apparatus control program 651 is a control program for controlling the overall information processing apparatus 310. A heat dissipation structure model addition module 652 is a module for adding an appropriate heat dissipation structure model in correspondence with the heat accumulation prediction of the three-dimensional fabricating model. The heat dissipation structure model addition module 652 includes a heat accumulation prediction module and a heat dissipation structure model selection/arrangement module. A laminating and fabricating data generation module 653 is a module for generating laminating and fabricating data of a three-dimensional fabricating model added with the heat dissipation structure model.

The input/output interface 660 interfaces input/output data with an input/output device. The input/output interface 660 is connected to the display unit 313 and the operation unit 314. In addition, a storage medium control apparatus and the like may be connected.

Note that programs and data which are associated with the generalpurpose functions of the information processing apparatus 310 and other feasible functions are not shown in the RAM 640 or the storage 650 of Fig. 6.

### «Three-Dimensional Fabricated Object Manufacturing Procedure»

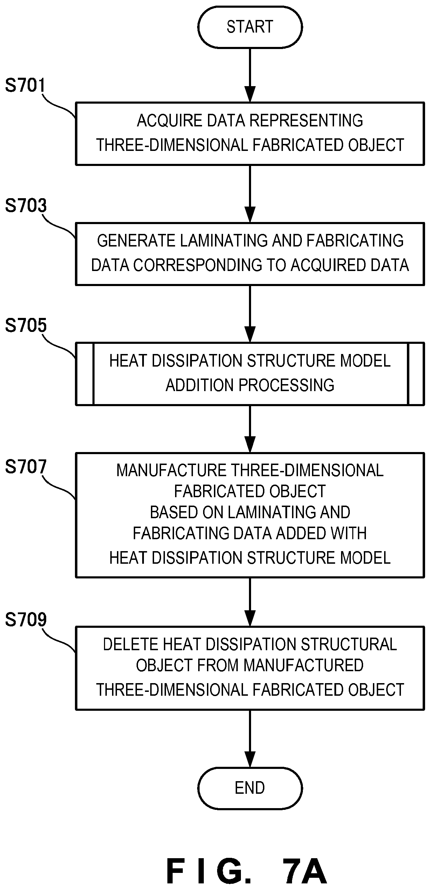

Fig. 7A is a flowchart illustrating the three-dimensional fabricated object manufacturing procedure of the three-dimensional fabricating system 300 according to this embodiment. Note that Fig. 7A shows an example in which the information processing apparatus 310 generates laminating and fabricating data of a three-dimensional fabricating model. However, another external apparatus may generate laminating and fabricating data.

In step S701, the information processing apparatus 310 acquires data representing a three-dimensional fabricated object. In step S703, the information processing apparatus 310 generates laminating and fabricating data of a three-dimensional fabricating model corresponding to the acquired data. In step S705, the information processing apparatus 310 executes processing of adding a heat dissipation structure model to the three-dimensional fabricating model as an application according to this embodiment, and transmits the laminating and fabricating data to the three-dimensional fabricating apparatus 320.

In step S707, the three-dimensional fabricating apparatus 320 manufactures the three-dimensional fabricated object added with a heat dissipation structural object in accordance with the received laminating and fabricating data added with the heat dissipation structure model. In step S709, the three-dimensional fabricating system 300 deletes the heat dissipation structural object from the manufactured three-dimensional fabricated object by a predetermined apparatus (not shown). In this way, the desired three-dimensional fabricated object is manufactured.

### (Heat Dissipation Structure model Addition Processing)

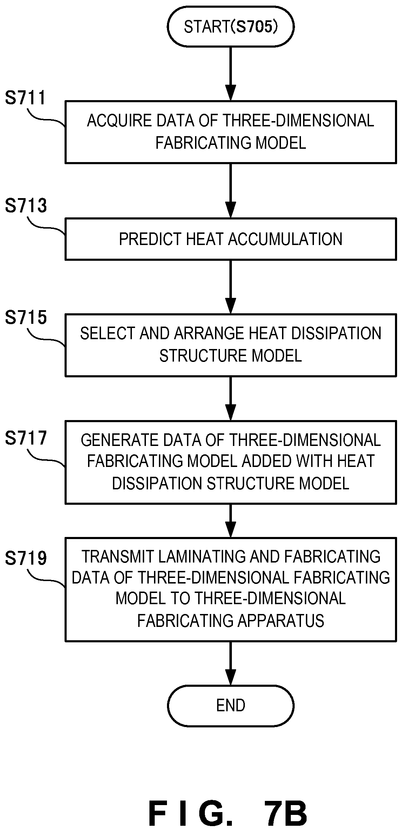

Fig. 7B is a flowchart illustrating the procedure of the heat dissipation structure model addition processing (S705) of the information processing apparatus 310 according to this embodiment. This flowchart is an application formed by a program for generating a structure for heat dissipation, and is executed by the CPU 610 using the RAM 640, thereby implementing the functional components of the information processing apparatus 310 of Fig. 3.

In step S711, the information processing apparatus 310 acquires the laminating and fabricating data of the three-dimensional fabricating model. In step S713, the information processing apparatus 310 predicts a heat accumulation at the time of laminating and fabricating based on the data of the three-dimensional fabricating model. In step S715, the information processing apparatus 310 selects a heat dissipation structure model corresponding to the heat accumulation prediction from the heat dissipation structure model database 402, and arranges it in the three-dimensional fabricating model.

In step S717, the information processing apparatus 310 generates laminating and fabricating data of the three-dimensional fabricating model added with the heat dissipation structure model. In step S719, the information processing apparatus 310 transmits the laminating and fabricating data of the three-dimensional fabricating model to the three-dimensional fabricating apparatus 320.

According to this embodiment, since an appropriate heat dissipation structure model is searched for from the heat dissipation structure model database in correspondence with heat accumulation prediction of a three-dimensional fabricating model, and added, it is possible to fabricate a desired three-dimensional fabricated object by accelerating heat dissipation of a laminated portion at the time of fabricating the three-dimensional fabricated object.

### [Second Embodiment]

An information processing apparatus according to the second embodiment of the present invention will be described next. The information processing apparatus according to this embodiment is different from that according to the first embodiment in that a heat dissipation structure model obtained by combining a heat accumulation fabricated portion and a heat dissipation structure model is arranged in advance in a three-dimensional fabricated object model. The remaining components and operations are the same as those in the first embodiment. Hence, the same reference numerals denote the same components and operations, and a detailed description thereof will be omitted.

### <<Overview of Heat Dissipation Structural Object Addition>>

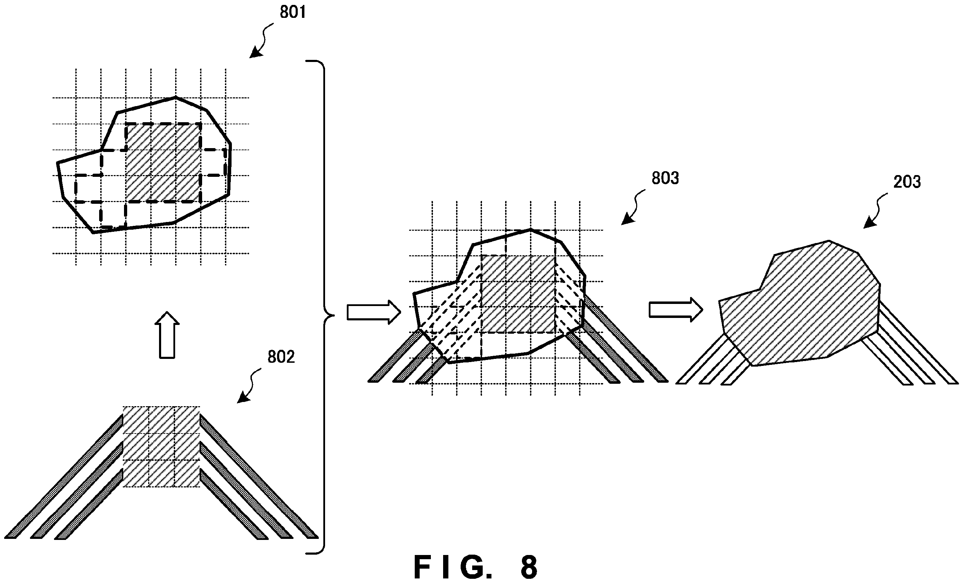

Fig. 8 is a view showing an overview of heat dissipation structural object addition according to this embodiment.

Referring to Fig. 8, a three-dimensional fabricating model 801 is divided into grids. Fig. 8 shows two-dimensional grids but cubes of a predetermined size are actually used as grids. It is determined whether the three-dimensional fabricating model 801 contains a lump in which grids of cubes of the predetermined size are arranged to have the same number of grids in each of the vertical, horizontal, and depth directions. Referring to Fig. 8, 3 × 3 × 3 cubes are contained in the three-dimensional fabricating model 801. Note that the lump is not limited to a cube, and may be a rectangular parallelepiped, a polyhedron having more surfaces, a sphere, or an ellipsoid. In addition, the grid is not limited to a cube. As the size of the grid is smaller, a more correct heat accumulation can be predicted. As the size of the grid is larger, it is possible to calculate a lump contained in the three-dimensional fabricating model 801 at a higher speed. Note that in Fig. 8, the lump is a polyhedron having a predetermined volume, and the heat dissipation structure model is a structural object having a plate shape extending obliquely downward from a predetermined surface of the polyhedron.

On the other hand, a heat dissipation structure model 802 obtained by adding heat dissipation structure models to a corresponding lump is prepared in advance. The lump contained in the three-dimensional fabricating model 801 is replaced (incorporated or embedded) by a part of the heat dissipation structure model 802, thereby generating a three-dimensional fabricating model 803 in which the lump is replaced by the heat dissipation structure model 802. A laminated and fabricated object based on the three-dimensional fabricating model 803 is a three-dimensional fabricated object 203 which is the same as that shown in Figs. 2A and 2B.

Therefore, heat dissipation structural object addition according to this embodiment can be implemented at high speed by simple processing of incorporating the heat dissipation structure model 802.

### (Heat Dissipation Structure model Adder)

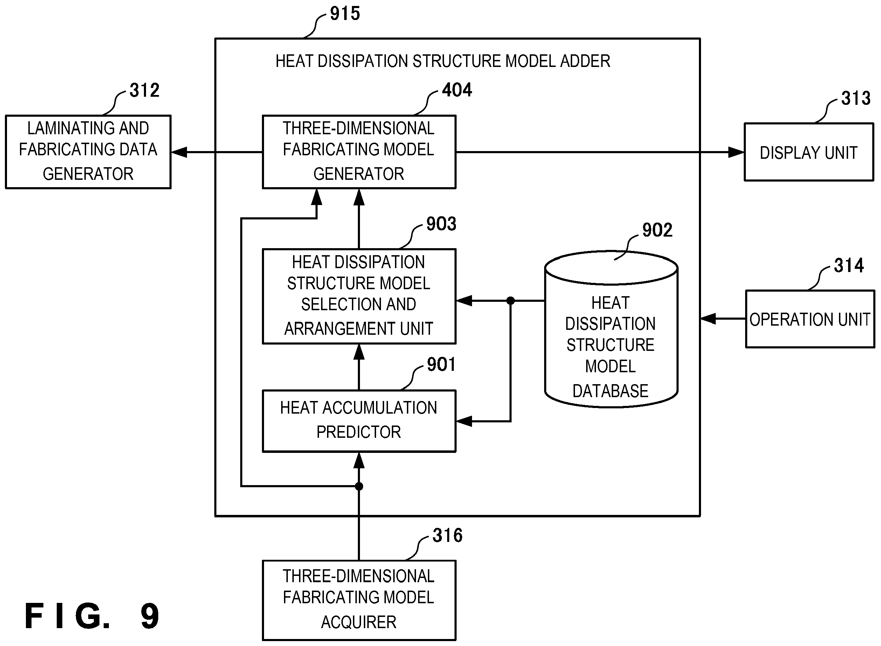

Fig. 9 is a block diagram showing the arrangement of a heat dissipation structure model adder 915 according to this embodiment. The heat dissipation structure model adder 915 replaces the heat dissipation structure model adder 315 of Fig. 3, thereby implementing heat dissipation structure model addition according to this embodiment. Note that in Fig. 9, the same reference numerals as those in Fig. 4 denote the same functional components and a description thereof will be omitted.

The heat dissipation structure model adder 915 includes a heat accumulation predictor 901, a heat dissipation structure model database 902, a heat dissipation structure model selection and arrangement unit 903, and a three-dimensional fabricating model generator 404.

The heat accumulation predictor 901 predicts the heat accumulation state in a three-dimensional fabricated object based on data of a three-dimensional fabricating model transferred from a three-dimensional fabricating model acquirer 316. The heat dissipation structure model selection and arrangement unit 903 selects a heat dissipation structure model from the heat dissipation structure model database 902 in correspondence with the heat accumulation prediction by the heat accumulation predictor 901, and determines an arrangement in the three-dimensional fabricating model. In the heat dissipation structure model adder 915 according to this embodiment, the processing of the heat accumulation predictor 901 and that of the heat dissipation structure model selection and arrangement unit 903 are collectively executed as one process. That is, a lump contained in the three-dimensional fabricating model is found, and a heat dissipation structure model in which a heat dissipation structure model is added to the same lump is searched for from the heat dissipation structure model database 902, and incorporated in the three-dimensional fabricating model, thereby implementing heat accumulation prediction and heat dissipation structural object addition.

The heat dissipation structure model database 902 stores a heat dissipation structure model to be incorporated in correspondence with a lump contained in a three-dimensional fabricating model.

### (Heat Accumulation Prediction and Heat Dissipation Structure Model Selection/Arrangement Table)

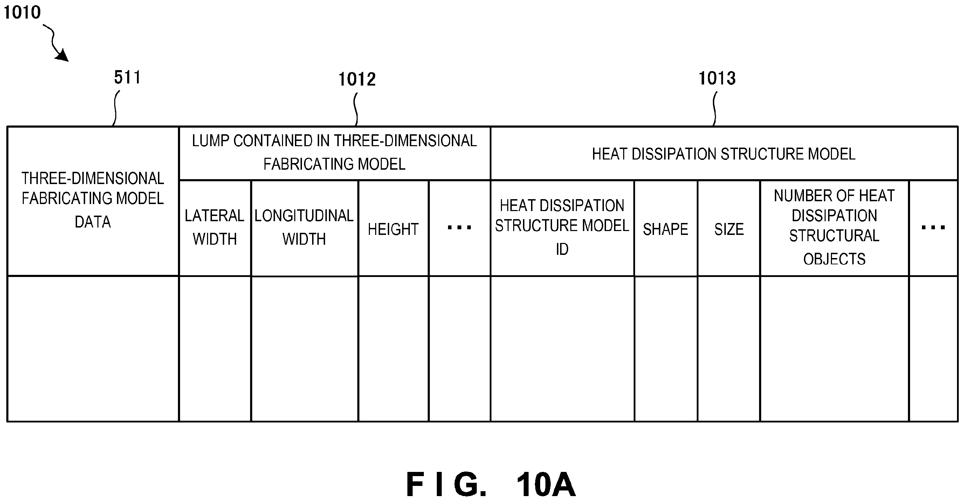

Fig. 10A is a table showing the structure of a heat accumulation prediction and heat dissipation structure model selection/arrangement table 1010 according to this embodiment. The heat accumulation prediction and heat dissipation structure model selection/arrangement table 1010 is used to select and arrange a heat dissipation structure model while predicting a heat accumulation state in a three-dimensional fabricated object based on data of a three-dimensional fabricating model transferred from the three-dimensional fabricating model acquirer 316.

The heat accumulation prediction and heat dissipation structure model selection/arrangement table 1010 stores a lump 1012 contained in a three-dimensional fabricating model and a corresponding heat dissipation structure model 1013 in association with three-dimensional fabricating model data 511. The lump 1012 contained in the three-dimensional fabricating model includes the lateral width, longitudinal width, and height of the lump. If the lateral width, longitudinal width, and height are equal, the lump is the cube shown in Fig. 8. The heat dissipation structure model 1013 includes a heat dissipation structure model ID, a shape, a size, and the number of added heat dissipation structural objects.

### (Heat Dissipation Structure Model Database)

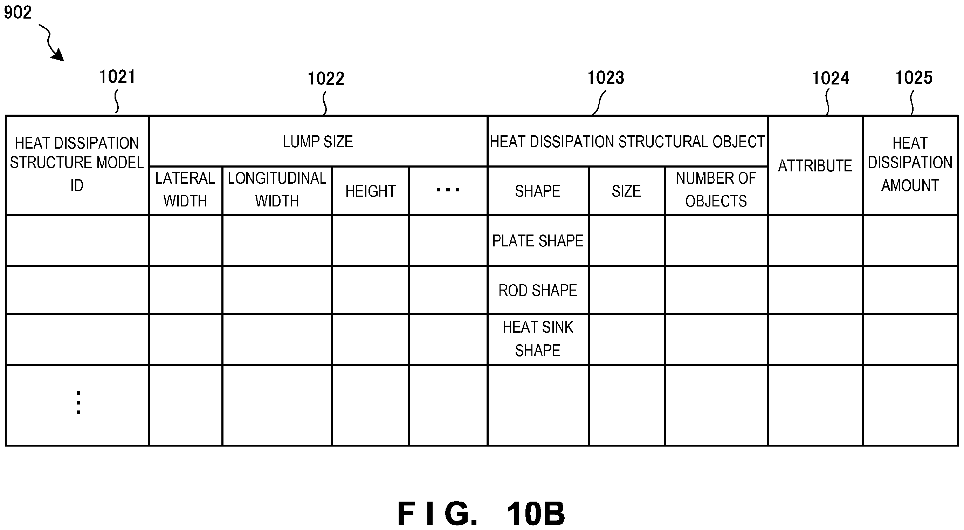

Fig. 10B is a table showing the structure of the heat dissipation structure model database 902 according to this embodiment. Note that the structure of the heat dissipation structure model database 902 is not limited to that shown in Fig. 10B.

The heat dissipation structure model database 902 stores a lump size 1022, a heat dissipation structural object 1023 added to a lump, and an attribute 1024 such as heat conductivity in association with a heat dissipation structure model ID 1021. The heat dissipation structure model database 902 stores a calculated heat dissipation amount 1025 in association with the heat dissipation structure model ID 1021. Note that in fact, the three-dimensional fabricated object and the heat dissipation structural object are desirably made of the same material. In this case, the three-dimensional fabricated object and the heat dissipation structural object have the same attribute.

### «Hardware Arrangement of Information Processing Apparatus»

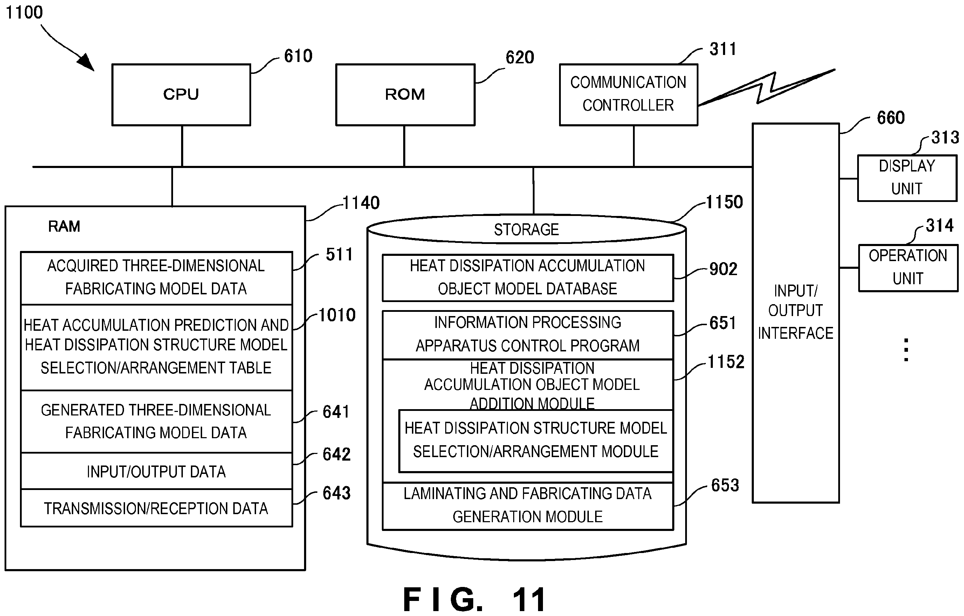

Fig. 11 is a block diagram showing the hardware arrangement of an information processing apparatus 1100 according to this embodiment. Note that in Fig. 11, the same reference numerals as those in Fig. 6 denote the same functional components and a description thereof will be omitted.

A RAM 1140 is a random access memory used by a CPU 610 as a work area for temporary storage. An area to store data necessary for implementation of the embodiment is allocated to the RAM 1140. The heat accumulation prediction and heat dissipation structure model selection/arrangement table 1010 is a table used to select a heat dissipation structure model from the heat dissipation structure model database 902 in correspondence with heat accumulation prediction, and arrange it at an incorporating position of a three-dimensional fabricating model.

A storage 1150 stores a database, various parameters, or the following data or programs necessary for implementation of the embodiment. A heat dissipation structure model addition module 1152 is a module for adding an appropriate heat dissipation structure model by incorporating an appropriate heat dissipation structure model in correspondence with heat accumulation prediction of the three-dimensional fabricating model.

Note that programs and data which are associated with the generalpurpose functions of the information processing apparatus 1100 and other feasible functions are not shown in the RAM 1140 or the storage 1150 of Fig. 11.

### (Heat Dissipation Structure model Addition Processing)

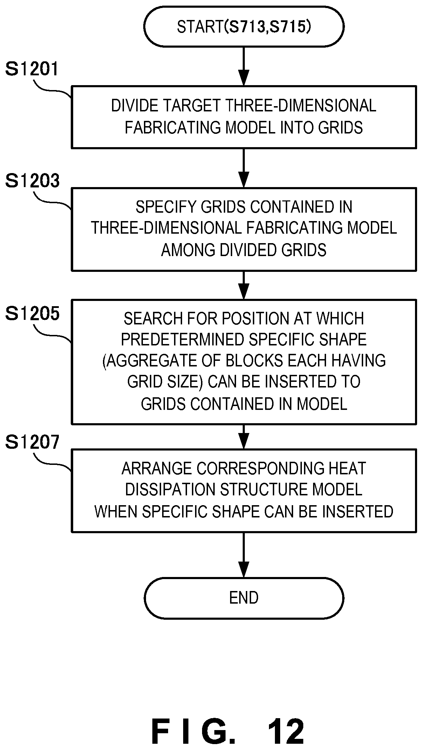

Fig. 12 is a flowchart illustrating the procedure of the heat dissipation structure model addition processing of the information processing apparatus 1100 in steps S713 and S715 according to this embodiment. This flowchart is executed by the CPU 610 using the RAM 1140, thereby implementing the functional components of the heat dissipation structure model adder 915 of Fig. 9.

In step S1201, the information processing apparatus 1100 divides a target three-dimensional fabricating model into predetermined grids. In step S1203, the information processing apparatus 1100 specifies grids contained in the three-dimensional fabricating model among the divided grids. In step S1205, the information processing apparatus 1100 searches for a position at which a predetermined specific shape (an aggregate of blocks each having a grid size) can be inserted to the grids contained in the model. In step S1207, the information processing apparatus 1100 arranges a corresponding heat dissipation structure model at an incorporating position when the specific shape can be inserted.

According to this embodiment, since heat accumulation prediction and heat dissipation structure model selection/arrangement are collectively processed by incorporating a heat dissipation structure model, it is possible to simply add a heat dissipation structure model.

### [Third Embodiment]

An information processing apparatus according to the third embodiment of the present invention will be described next. The information processing apparatus according to this embodiment is different from those according to the first and second embodiments in that another heat dissipation structure model having a different thickness and shape is added to a three-dimensional fabricated object model. For example, a combination of heat dissipation structure models having different thicknesses, a heat dissipation structural object having a shape other than a plate shape or having a constriction shape which can be deleted after fabricating, or the like is added. The remaining components and operations are the same as those in the first and second embodiments. Hence, the same reference numerals denote the same components and operations, and a detailed description thereof will be omitted.

### <<Overview of Heat Dissipation Structural Object Addition>>

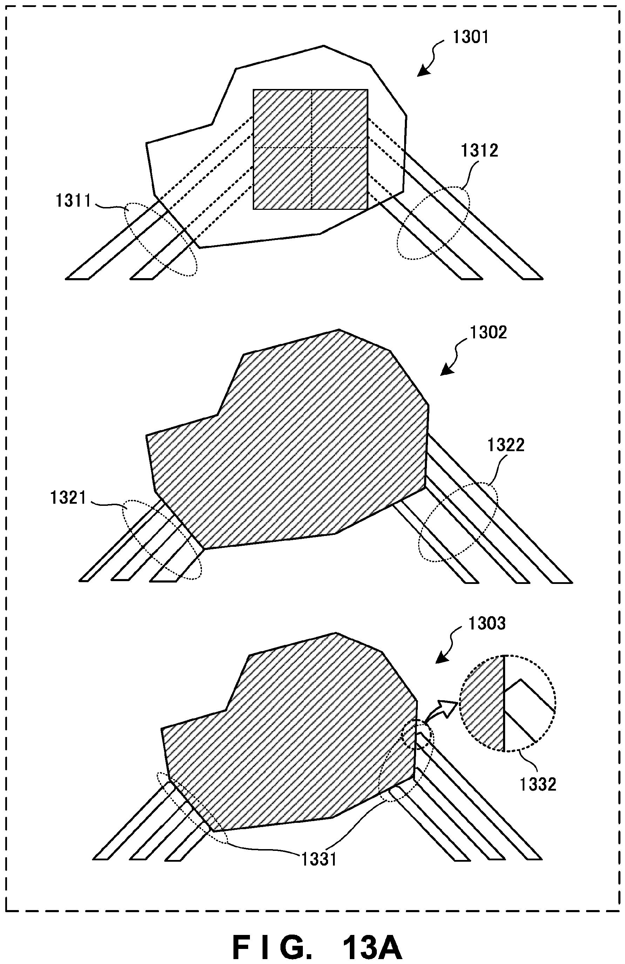

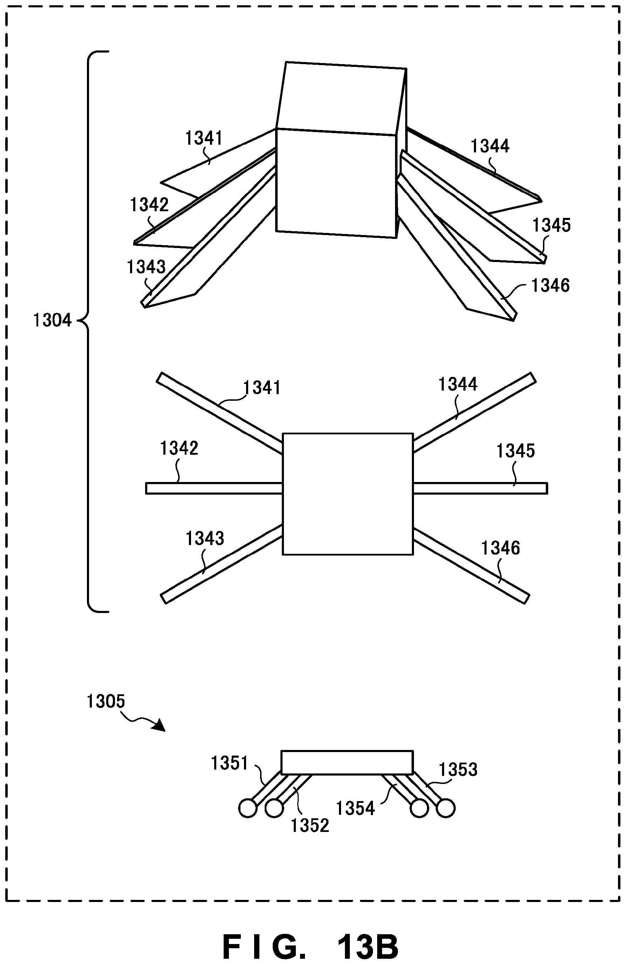

Figs. 13A and 13B are views each showing an overview of heat dissipation structural object addition according to this embodiment.

A three-dimensional fabricated object 1301 shown in Fig. 13A has a larger grid size than that in the second embodiment, and indicates a fabricated object in which two heat dissipation structural objects 1311 and two heat dissipation structural objects 1312 are added to 2 × 2 × 2 cubes.

A three-dimensional fabricated object 1302 shown in Fig. 13A indicates a fabricated object to which heat dissipation structural objects 1321 having different thicknesses and heat dissipation structural objects 1322 having different thicknesses are added. Note that a size in the vertical and horizontal directions, a shape, and a length may be appropriately selected.

A three-dimensional fabricated object 1303 shown in Fig. 13A indicates a fabricated object in which the cross sections of addition portions 1331 of heat dissipation structural objects are fabricated to be narrower than the cross sections of the heat dissipation structural objects, respectively, and thus the heat dissipation structural objects can be readily deleted. Furthermore, Fig. 13A shows an enlarged view 1332 by enlarging the addition portion of the heat dissipation structural object. Note that this contrivance for facilitating deletion of the heat dissipation structural objects is merely an example, and another contrivance is included.

Unlike Fig. 13A, Fig. 13B shows an example in which a heat dissipation structural object has no plate shape shown in Figs. 2A and 2B of the first embodiment.

Fig. 13B shows a perspective view (upper view) and a plan view (central view) each showing a three-dimensional fabricated object 1304 to which heat dissipation structural objects 1341 to 1346 are added.

A three-dimensional fabricated object 1305 shown in Fig. 13B indicates a fabricated object added with heat dissipation structural objects 1351 to 1354 each having a special heat dissipation structure in which the volume of a distal end is increased to improve the heat dissipation effect.

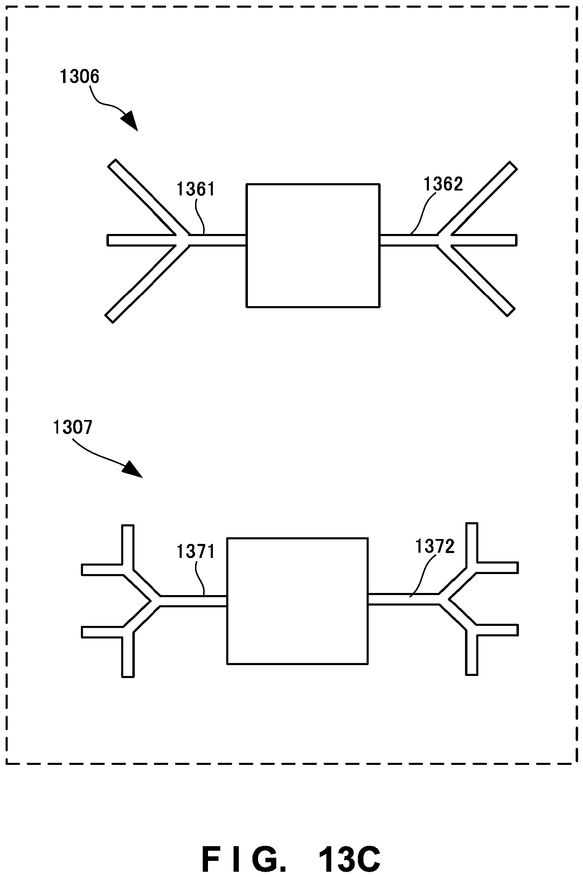

Fig. 13C shows examples in each of which each heat dissipation structural object has a shape different from those in Figs. 2A and 2B or 13A and 13B.

A three-dimensional fabricated object 1306 shown in Fig. 13C indicates an fabricated object added with dentritic heat dissipation structural objects 1361 and 1362.

A three-dimensional fabricated object 1307 shown in Fig. 13C indicates a fabricated object added with heat dissipation structural objects 1371 and 1372 each of which branches into two layers.

Note that the structure of the heat dissipation structural object is not limited to the above embodiments, and may have, for example, a heat sink shape whose surface is not flat or whose surface area is increased by a comb-like shape.

According to this embodiment, it is possible to add preferred contrivances including the size and type of a heat dissipation structure model, the number of heat dissipation structure models, and interval between the heat dissipation structure models in accordance with a type such as the shape of a three-dimensional fabricating model.

### [Fourth Embodiment]

An information processing apparatus according to the fourth embodiment of the present invention will be described next. The information processing apparatus according to this embodiment is different from those according to the first to third embodiments in that the heat dissipation effect of a result of adding a heat dissipation structure model to a three-dimensional fabricated object model is learned. The remaining components and operations are the same as those in the first to third embodiments. Hence, the same reference numerals denote the same components and operations, and a detailed description thereof will be omitted.

### (Heat Dissipation Structure model Adder)

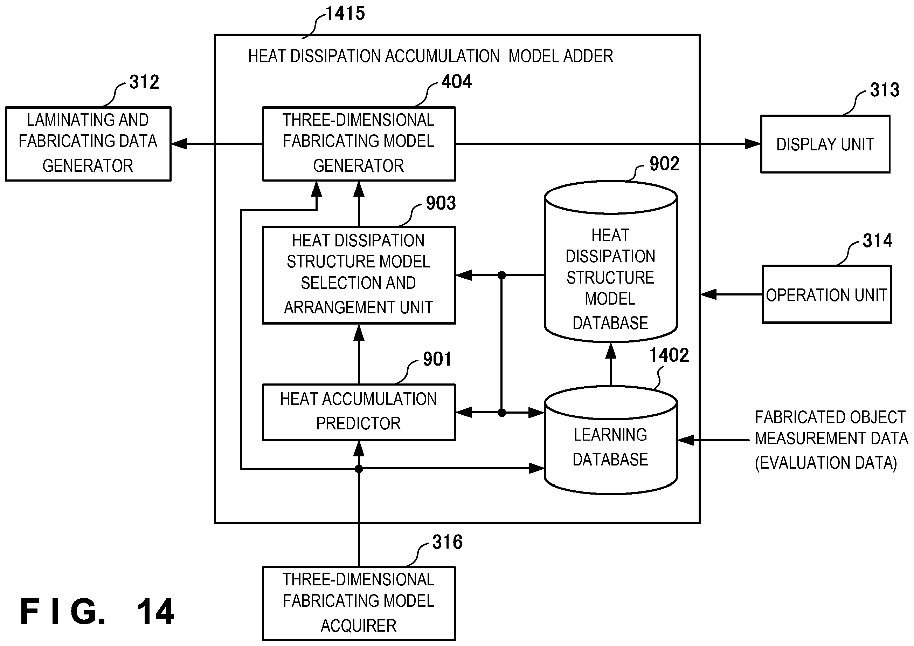

Fig. 14 is a block diagram showing the arrangement of a heat dissipation structure model adder 1415 according to this embodiment. Note that in Fig. 14, the reference numerals as those in Fig. 9 denote the same functional components and a description thereof will be omitted. Fig. 14 shows the arrangement as a modification of the second embodiment but the arrangement may be a modification of Fig. 4 of the first embodiment.

A learning database 1402 evaluates a heat dissipation structure model based on laminating and fabricating data of an acquired three-dimensional fabricating model, laminating and fabricating data of a three-dimensional fabricating model added with a heat dissipation structure model, and measurement data of a three-dimensional fabricated object as a laminating and fabricating result. By modifying a heat dissipation structure model database 902 based on the evaluation result, a more appropriate heat dissipation structure model is selected and a more appropriate heat dissipation structure model is added.

According to this embodiment, it is possible to add a more appropriate heat dissipation structure model in correspondence with a type such as the shape of a three-dimensional fabricating model by accumulating heat dissipation structural object addition results.

### [Other Embodiments]

While the present invention has been described with reference to exemplary embodiments, it is to be understood that the invention is not limited to the disclosed exemplary embodiments, but by the scope of the following claims.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. A further example not covered by the appended claims contemplates a non-transitory computer readable medium storing a program that causes a computer to execute processing steps included in the above-described embodiments.

## Claims

1. An information processing apparatus (310) comprising:
an acquirer (316) configured to acquire data (511) of a three-dimensional fabricating model (201) used by a fabricating apparatus (320) for laminating and fabricating a three-dimensional fabricating object (203),
a heat accumulation predictor (401) configured to predict a heat accumulation state (513; 521) in the three-dimensional fabricating object (203), using a heat accumulation prediction table (510), wherein the predicted heat accumulation state (513; 521)
includes a heat accumulation position and a heat accumulation amount
based on a shape (512) of the three-dimensional fabricating model (201) to be laminated and fabricated from the data (511) of the three-dimensional fabricating model (201)
a heat dissipation structure model database (402) storing a plurality of heat dissipation structure models (202, 231; 522) each associated with a heat accumulation prediction and predicted heat dissipation amount,
a heat dissipation structure model selection and arrangement unit (403) configured to select and arrange a heat dissipation structure model (202, 231; 522) from the plurality of heat dissipation structure models (202, 231; 522) for performing heat dissipation out of the three-dimensional fabricating model (201) from a laminated portion on the three-dimensional fabricating model (201) during a laminating and fabricating time,
wherein the selection and arrangement is based on the predicted heat accumulation position and the predicted heat accumulation amount,
a three-dimensional fabricating model generator (404) configured to generate a new three-dimensional fabricating model by adding, to the three-dimensional fabricating model (201), the selected and arranged heat dissipation structure model (202, 231; 522), and
a laminating and fabricating data generator (312) configured to generate new laminating and fabricating data from the generated new three-dimensional fabricating model.

2. An information processing apparatus (310) comprising:
an acquirer (316) configured to acquire data (511) of a three-dimensional fabricating model (201; 801) used by a fabricating apparatus (320) for laminating and fabricating a three-dimensional fabricating object (203; 1301),
a heat dissipation structure model adder (915) comprising:
-- a heat accumulation predictor (901) configured to predict a heat accumulation state in a three-dimensional fabricated object based on the acquired data,
-- a heat dissipation structure combined model database (902) storing a plurality of heat dissipation structure combined models,
wherein each model is obtained by combining a predetermined polyhedron having a predetermined volume and a heat dissipation structure model added to a predetermined surface of the predetermined polyhedron,
-- a heat dissipation structure model selection and arrangement unit (903) configured to select a heat dissipation structure combined model from the heat dissipation structure combined model database (902) in correspondence with the heat accumulation prediction by the heat accumulation predictor (901),
-- wherein the processing of the heat accumulation predictor and heat dissipation structure model selection and arrangement unit are collectively executed as one process, wherein the process is configured
to select, from the plurality of heat dissipation structure combined models, a heat dissipation structure combined model whose predetermined polyhedron is the same as a found volume contained in the acquired model, and to replace the found volume contained in the three dimensional fabricating model by the selected predetermined polyhedron, so as to add data of a heat dissipation structure model from the selected heat dissipation structure combined model, to the acquired data of the three-dimensional fabricating model,
and
-- a three-dimensional fabricating model generator (404) configured to generate a new three-dimensional fabricating model by adding, to the three-dimensional fabricating model (201), the selected and arranged heat dissipation structure model (202, 231; 522), and
- a laminating and fabricating data generator (312) configured to generate new laminating and fabricating data from the generated new three-dimensional fabricating model.

3. The information processing apparatus according to any one of claims 1 or 2, wherein said data generator is further configured to generate the data of the new three-dimensional fabricating model with the heat dissipation structure model extending obliquely downward from a surface of the three-dimensional fabricating model.

4. The information processing apparatus according to any one of claims 1 to 3, wherein the heat dissipation structure model includes at least one structure model, and a size of the at least one structure model, a number of the at least one structure model, and an interval between the at least one structure model correspond to a shape of the three-dimensional fabricating model.

5. The information processing apparatus according to any one of claims 1 to 4, the heat dissipation structure model being added to a position at which the heat dissipation structural model is deletable from the three-dimensional fabricating model after the three-dimensional fabricating model has been fabricated.

6. The information processing apparatus according to claim 5, wherein a cross section of a portion at which the heat dissipation structure model is added to the three-dimensional fabricating model is narrower than a cross section of the heat dissipation structure model.

7. The information processing apparatus according to any one of claims 1 to 6, further comprising:
a data transmitter configured to transmit
the data of the new three-dimensional fabricating model with the heat dissipation structure model
to
the fabricating apparatus for laminating and fabricating the new three-dimensional fabricating model.

8. The information processing apparatus according to any one of claims 1 to 7, further comprising:
a learning unit configured to evaluate the heat dissipation structure model based on the acquired data of the three-dimensional fabricating model, the generated data of the new three-dimensional fabricating model with the heat dissipation structure model, and measurement data of a laminated and fabricated result of the new three-dimensional fabricating model,
wherein said data generator is further configured to determine a heat dissipation structure model in further consideration of an evaluated result by said learning unit.

9. A method for generating a structure for heat dissipation of a three-dimensional fabricating model, the method comprising:
acquiring data (511) of a three-dimensional fabricating model (201) used by a fabricating apparatus (320) for laminating and fabricating a three-dimensional fabricating object (203),
predicting a heat accumulation state (513; 521) in the three-dimensional fabricating object (203), using a heat accumulation prediction table (510), wherein
the predicted heat accumulation state (513; 521)
includes a heat accumulation position and a heat accumulation amount
based on a shape (512) of the three-dimensional fabricating model (201) to be laminated and fabricated from the data (511) of the three-dimensional fabricating model (201)
storing a plurality of heat dissipation structure models (202, 231; 522) each associated with a heat accumulation prediction and predicted heat dissipation amount,
selecting and arranging a heat dissipation structure model (202, 231; 522) from the plurality of heat dissipation structure models (202, 231; 522) for performing heat dissipation out of the three-dimensional fabricating model (201) from a laminated portion on the three-dimensional fabricating model (201) during a laminating and fabricating time,
wherein the selecting and arranging is based on the predicted heat accumulation position and the predicted heat accumulation amount,
generating a new three-dimensional fabricating model by adding, to the three-dimensional fabricating model (201), the selected and arranged heat dissipation structure model (202, 231; 522), and
generating new laminating and fabricating data from the generated new three-dimensional fabricating model.

10. A method for generating a structure for heat dissipation of a three-dimensional fabricating model, the method comprising:
acquiring data (511) of a three-dimensional fabricating model (201; 801) used by a fabricating apparatus (320) for laminating and fabricating a three-dimensional fabricating object (203; 1301),
predicting a heat accumulation state in a three-dimensional fabricated object based on the acquired data,
-storing a plurality of heat dissipation structure combined models,
wherein each model is obtained by combining a predetermined polyhedron having a predetermined volume and a heat dissipation structure model added to a predetermined surface of the predetermined polyhedron,
selecting a heat dissipation structure combined model from the heat dissipation structure combined model database (902) in correspondence with the heat accumulation prediction by the heat accumulation predictor (901),
-wherein the processing of the heat accumulation predicting and heat dissipation structure model selecting and arranging are collectively executed as one process, wherein the process comprises
selecting, from the plurality of heat dissipation structure combined models, a heat dissipation structure combined model whose predetermined polyhedron is the same as a found volume contained in the acquired model, and replacing the found volume contained in the three dimensional fabricating model by the selected predetermined polyhedron, so as to add data of a heat dissipation structure model from the selected heat dissipation structure combined model, to the acquired data of the three-dimensional fabricating model,
and
- generating a new three-dimensional fabricating model by adding, to the three-dimensional fabricating model (201), the selected and arranged heat dissipation structure model (202, 231; 522), and
- generating new laminating and fabricating data from the generated new three-dimensional fabricating model.

11. A program for generating a structure for heat dissipation of a three-dimensional fabricating model, the program when executed by a computer causes the computer to execute a method according to claim 9 or claim 10.

12. A three-dimensional fabricating system including the information processing apparatus according to any one of claims 1-8, the system further comprising:
a laminating and fabricating unit configured to laminate and fabricate the new three-dimensional fabricating model with the heat dissipation structural model in accordance with the data of the new three-dimensional fabricating model generated by said data generator of the information processing apparatus.

13. A method for manufacturing a three-dimensional fabricating model according to the method as defined in claim 9 or 10, further comprising:
laminating and fabricating the new three-dimensional fabricating model with the heat dissipation structural model in accordance with the generated data of the new three-dimensional fabricating model .

## Patentansprüche

1. Informationsverarbeitungsvorrichtung (310), mit:
einer Erlangungseinrichtung (316), die dazu eingerichtet ist, um Daten (511) eines dreidimensionalen Herstellungsmodells (201) zu erlangen, das von einer Herstellungsvorrichtung (320) zum Laminieren und Herstellen eines dreidimensionalen Herstellungsobjekts (203) verwendet wird,
einer Wärmeansammlungsvorhersageeinrichtung (401), die dazu eingerichtet ist, um einen Wärmeansammlungszustand (513; 521) in dem dreidimensionalen Herstellungsobjekt (203) unter Verwendung einer Wärmeansammlungsvorhersagetabelle (510) vorherzusagen, wobei der vorhergesagte Wärmeansammlungszustand (513; 521)
eine Wärmeansammlungsposition und eine Wärmeansammlungsmenge umfasst,
basierend auf einer Form (512) des dreidimensionalen Herstellungsmodells (201), das aus den Daten (511) des dreidimensionalen Herstellungsmodells (201) laminiert und hergestellt werden soll,
einer Wärmeableitungsstrukturmodelldatenbank (402), die eine Vielzahl von Wärmeableitungsstrukturmodellen (202, 231; 522) speichert, die jeweils mit einer Wärmeansammlungsvorhersage und einer vorhergesagten Wärmeableitungsmenge assoziiert sind,
einer Wärmeableitungsstrukturmodell-Auswahl- und - Anordnungseinheit (403), die dazu eingerichtet ist, um ein Wärmeableitungsstrukturmodell (202, 231; 522) aus der Vielzahl von Wärmeableitungsstrukturmodellen (202, 231; 522) auszuwählen und anzuordnen, um eine Wärmeableitung aus dem dreidimensionalen Herstellungsmodell (201) von einem laminierten Teil auf dem dreidimensionalen Herstellungsmodell (201) während einer Laminierungs-und Herstellungszeit durchzuführen,
wobei die Auswahl und Anordnung auf der vorhergesagten Wärmeansammlungsposition und der vorhergesagten Wärmeansammlungsmenge basiert,
einer Erzeugungseinrichtung (404) für ein dreidimensionales Herstellungsmodell, die dazu eingerichtet ist, um ein neues dreidimensionales Herstellungsmodell zu erzeugen, indem zu dem dreidimensionalen Herstellungsmodell (201) das ausgewählte und angeordnete Wärmeableitungsstrukturmodell (202, 231; 522) hinzugefügt wird, und
einer Laminier- und Herstellungsdaten-Erzeugungseinrichtung (312), die dazu eingerichtet ist, um neue Laminier- und Herstellungsdaten aus dem erzeugten neuen dreidimensionalen Herstellungsmodell zu erzeugen.

2. Informationsverarbeitungsvorrichtung (310), mit:
einer Erlangungseinrichtung (316), die dazu eingerichtet ist, um Daten (511) eines dreidimensionalen Herstellungsmodells (201; 801) zu erlangen, das von einer Herstellungsvorrichtung (320) zum Laminieren und Herstellen eines dreidimensionalen Herstellungsobjekts (203; 1301) verwendet wird;
einer Wärmeableitungsstrukturmodell-Hinzufügungseinrichtung (915), mit:
einer Wärmeansammlungsvorhersageeinrichtung (901), die dazu eingerichtet ist, um einen Wärmeansammlungszustand in einem dreidimensionalen hergestellten Objekt auf der Grundlage der erlangten Daten vorherzusagen,
einer Datenbank (902) für kombinierte Wärmeableitungsstrukturmodelle, die eine Vielzahl von kombinierten Wärmeableitungsstrukturmodellen speichert,
wobei jedes Modell durch Kombinieren eines vorbestimmten Polyeders mit einem vorbestimmten Volumen und einem Wärmeableitungsstrukturmodell, das zu einer vorbestimmten Oberfläche des vorbestimmten Polyeders hinzugefügt wird, erhalten wird,
einer Wärmeableitungsstrukturmodell-Auswahl- und - Anordnungseinheit (903), die dazu eingerichtet ist, um ein kombiniertes Wärmeableitungsstrukturmodell aus der Datenbank (902) für kombinierte Wärmeableitungsstrukturmodelle in Übereinstimmung mit der Wärmeansammlungsvorhersage durch die Wärmeansammlungsvorhersageeinrichtung (901) auszuwählen,
wobei die Verarbeitung der Wärmeansammlungsvorhersageeinrichtung und der Wärmeableitungsstrukturmodell-Auswahl- und Anordnungseinheit gemeinsam als ein Prozess ausgeführt werden, wobei der Prozess dazu eingerichtet ist,
um aus der Vielzahl von kombinierten Wärmeableitungsstrukturmodellen ein kombiniertes Wärmeableitungsstrukturmodell auszuwählen, dessen vorbestimmtes Polyeder dasselbe ist, wie ein gefundenes Volumen, das in dem erlangten Modell enthalten ist, und um das gefundene Volumen, das in dem dreidimensionalen Herstellungsmodell enthalten ist, durch das ausgewählte vorbestimmte Polyeder zu ersetzen, um Daten eines Wärmeableitungsstrukturmodells aus dem ausgewählten kombinierten Wärmeableitungsstrukturmodell zu den erlangten Daten des dreidimensionalen Herstellungsmodells hinzuzufügen,
und
einer Erzeugungseinrichtung (404) für ein dreidimensionales Herstellungsmodell, die dazu eingerichtet ist, um ein neues dreidimensionales Herstellungsmodell zu erzeugen, durch Hinzufügen des ausgewählten und angeordneten Wärmeableitungsstrukturmodells (202, 231; 522) zu dem dreidimensionalen Herstellungsmodell (201), und
einer Laminier- und Herstellungsdaten-Erzeugungseinrichtung (312), die dazu eingerichtet ist, um neue Laminier- und Herstellungsdaten aus dem erzeugten neuen dreidimensionalen Herstellungsmodell zu erzeugen.

3. Informationsverarbeitungsvorrichtung nach einem der Ansprüche 1 oder 2, wobei die Datenerzeugungseinrichtung ferner dazu eingerichtet ist, um die Daten des neuen dreidimensionalen Herstellungsmodells zu erzeugen, wobei sich das Wärmeableitungsstrukturmodell schräg nach unten von einer Oberfläche des dreidimensionalen Herstellungsmodells erstreckt.

4. Informationsverarbeitungsvorrichtung nach einem der Ansprüche 1 bis 3, wobei das Wärmeableitungsstrukturmodell mindestens ein Strukturmodell umfasst und eine Größe des mindestens einen Strukturmodells, eine Anzahl des mindestens einen Strukturmodells und ein Intervall zwischen dem mindestens einen Strukturmodell einer Form des dreidimensionalen Herstellungsmodells entspricht.

5. Informationsverarbeitungsvorrichtung nach einem der Ansprüche 1 bis 4, wobei das Wärmeableitungsstrukturmodell an einer Position hinzugefügt wird, an der das Wärmeableitungsstrukturmodell aus dem dreidimensionalen Herstellungsmodell löschbar ist, nachdem das dreidimensionale Herstellungsmodell hergestellt worden ist.

6. Informationsverarbeitungsvorrichtung nach Anspruch 5, wobei ein Querschnitt eines Teils, an dem das Wärmeableitungsstrukturmodell zu dem dreidimensionalen Herstellungsmodell hinzugefügt wird, schmaler als ein Querschnitt des Wärmeableitungsstrukturmodells ist.

7. Informationsverarbeitungsvorrichtung nach einem der Ansprüche 1 bis 6, ferner mit:
einer Datenübertragungseinrichtung, die dazu eingerichtet ist, um
die Daten des neuen dreidimensionalen Herstellungsmodells mit dem Wärmeableitungsstrukturmodell
an
die Herstellungsvorrichtung zum Laminieren und Herstellen des neuen dreidimensionalen Herstellungsmodells zu übertragen.

8. Informationsverarbeitungsvorrichtung nach einem der Ansprüche 1 bis 7, ferner mit:
einer Lerneinheit, die dazu eingerichtet ist, um das Wärmeableitungsstrukturmodell auf Grundlage der erlangten Daten des dreidimensionalen Herstellungsmodells, die erzeugten Daten des neuen dreidimensionalen Herstellungsmodells mit dem Wärmeableitungsstrukturmodell, und die Messdaten eines laminierten und hergestellten Ergebnisses des neuen dreidimensionalen Herstellungsmodells zu bewerten,
wobei die Datenerzeugungseinrichtung ferner dazu eingerichtet ist, um ein Wärmeableitungsstrukturmodell unter weiterer Berücksichtigung eines ausgewerteten Ergebnisses durch die Lerneinheit zu bestimmen.

9. Verfahren zum Erzeugen einer Struktur zur Wärmeableitung eines dreidimensionalen Herstellungsmodells, wobei das Verfahren umfasst:
Erlangen von Daten (511) eines dreidimensionalen Herstellungsmodells (201), das von einer Herstellungsvorrichtung (320) zum Laminieren und Herstellen eines dreidimensionalen Herstellungsobjekts (203) verwendet wird,
Vorhersagen eines Wärmeansammlungszustands (513; 521) in dem dreidimensionalen Herstellungsobjekt (203) unter Verwendung einer Wärmeansammlungsvorhersagetabelle (510), wobei der vorhergesagte Wärmeansammlungszustand (513; 521)
eine Wärmeansammlungsposition und eine Wärmeansammlungsmenge umfasst,
basierend auf einer Form (512) des dreidimensionalen Herstellungsmodells (201), das aus den Daten (511) des dreidimensionalen Herstellungsmodells (201) laminiert und hergestellt werden soll,
Speichern einer Vielzahl von Wärmeableitungsstrukturmodellen (202, 231; 522), die jeweils mit einer Wärmeansammlungsvorhersage und einer vorhergesagten Wärmeableitungsmenge assoziiert sind,
Auswählen und Anordnen eines Wärmeableitungsstrukturmodells (202, 231; 522) aus der Vielzahl von Wärmeableitungsstrukturmodellen (202, 231; 522), um eine Wärmeableitung aus dem dreidimensionalen Herstellungsmodell (201) von einem laminierten Teil auf dem dreidimensionalen Herstellungsmodell (201) während einer Laminierungs-und Herstellungszeit durchzuführen,
wobei das Auswählen und Anordnen auf der vorhergesagten Wärmeansammlungsposition und der vorhergesagten Wärmeansammlungsmenge basiert,
Erzeugen eines neuen dreidimensionalen Herstellungsmodells, durch Hinzufügen des ausgewählten und angeordneten Wärmeableitungsstrukturmodells (202, 231; 522) zu dem dreidimensionalen Herstellungsmodell (201), und
Erzeugen neuer Laminier- und Herstellungsdaten aus dem erzeugten neuen dreidimensionalen Herstellungsmodell.

10. Verfahren zum Erzeugen einer Struktur zur Wärmeableitung eines dreidimensionalen Herstellungsmodells, wobei das Verfahren umfasst:
Erlangen von Daten (511) eines dreidimensionalen Herstellungsmodells (201; 801), das von einer Herstellungsvorrichtung (320) zum Laminieren und Herstellen eines dreidimensionalen Herstellungsobjekts (203; 1301) verwendet wird;
Vorhersagen eines Wärmeansammlungszustands in einem dreidimensionalen hergestellten Objekt auf Grundlage der erlangten Daten,
Speichern einer Vielzahl von kombinierten Wärmeableitungsstrukturmodellen,
wobei jedes Modell durch Kombinieren eines vorbestimmten Polyeders mit einem vorbestimmten Volumen und einem Wärmeableitungsstrukturmodell, das zu einer vorbestimmten Oberfläche des vorbestimmten Polyeders hinzugefügt wird, erhalten wird,
Auswählen eines kombinierten Wärmeableitungsstrukturmodells aus der Datenbank (902) für kombinierte Wärmeableitungsstrukturmodelle in Übereinstimmung mit der Wärmeansammlungsvorhersage durch die Wärmeansammlungsvorhersageeinrichtung (901),
wobei die Verarbeitung des Wärmeansammlungsvorhersagens und des Auswählens und Anordnens des Wärmeableitungsstrukturmodells gemeinsam als ein Prozess ausgeführt werden, wobei der Prozess umfasst:
Auswählen, aus der Vielzahl von kombinierten Wärmeableitungsstrukturmodellen, eines kombinierten Wärmeableitungsstrukturmodells, dessen vorbestimmtes Polyeder dasselbe ist, wie ein gefundenes Volumen, das in dem erlangten Modell enthalten ist, und Ersetzen des gefundenen Volumens, das in dem dreidimensionalen Herstellungsmodell enthalten ist, durch das ausgewählte vorbestimmte Polyeder, um Daten eines Wärmeableitungsstrukturmodells aus dem ausgewählten kombinierten Wärmeableitungsstrukturmodell zu den erlangten Daten des dreidimensionalen Herstellungsmodells hinzuzufügen,
und
Erzeugen eines neuen dreidimensionalen Herstellungsmodells durch Hinzufügen des ausgewählten und angeordneten Wärmeableitungsstrukturmodells (202, 231; 522) zu dem dreidimensionalen Herstellungsmodell (201), und
Erzeugen neuer Laminier- und Herstellungsdaten aus dem erzeugten neuen dreidimensionalen Herstellungsmodell.

11. Programm zum Erzeugen einer Struktur zur Wärmeableitung eines dreidimensionalen Herstellungsmodells, wobei das Programm, wenn es von einem Computer ausgeführt wird, den Computer veranlasst, ein Verfahren nach Anspruch 9 oder Anspruch 10 auszuführen.

12. Dreidimensionales Herstellungssystem, das die Informationsverarbeitungsvorrichtung nach einem der Ansprüche 1 bis 8 enthält, wobei das System ferner umfasst:
eine Laminier- und Herstellungseinheit, die dazu eingerichtet ist, um das neue dreidimensionale Herstellungsmodell mit dem Wärmeableitungsstrukturmodell in Übereinstimmung mit den Daten des neuen dreidimensionalen Herstellungsmodells, die durch die Datenerzeugungseinrichtung der Informationsverarbeitungsvorrichtung erzeugt wurden, zu laminierten und zu fertigen.

13. Verfahren zur Herstellung eines dreidimensionalen Herstellungsmodells gemäß dem Verfahren nach Anspruch 9 oder 10, ferner mit:
Laminieren und Herstellen des neuen dreidimensionalen Herstellungsmodells mit dem Wärmeableitungsstrukturmodell in Übereinstimmung mit den erzeugten Daten des neuen dreidimensionalen Herstellungsmodells.

## Revendications

1. Appareil de traitement d'informations (310) comprenant :
un dispositif d'acquisition (316) configuré pour acquérir des données (511) d'un modèle de fabrication tridimensionnelle (201) utilisé par un appareil de fabrication (320) pour la stratification et la fabrication d'un objet de fabrication tridimensionnelle (203),
un dispositif de prédiction d'accumulation de chaleur (401) configuré pour prédire un état d'accumulation de chaleur (513 ; 521) dans l'objet de fabrication tridimensionnelle (203), à l'aide d'une table de prédiction d'accumulation de chaleur (510), dans lequel l'état d'accumulation de chaleur prédit (513 ; 521) inclut une position d'accumulation de chaleur et une quantité d'accumulation de chaleur basées sur une forme (512) du modèle de fabrication tridimensionnelle (201) devant être stratifié et fabriqué à partir des données (511) du modèle de fabrication tridimensionnelle (201)
une base de données de modèles de structure de dissipation de chaleur (402) stockant une pluralité de modèles de structure de dissipation de chaleur (202, 231 ; 522) associés chacun à une prédiction d'accumulation de chaleur et à une quantité de dissipation de chaleur prédite,
une unité de sélection et d'agencement de modèle de structure de dissipation de chaleur (403) configurée pour sélectionner et agencer un modèle de structure de dissipation de chaleur (202, 231 ; 522) à partir de la pluralité de modèles de structure de dissipation de chaleur (202, 231 ; 522) pour réaliser une dissipation de chaleur sur le modèle de fabrication tridimensionnelle (201) à partir d'une partie stratifiée sur le modèle de fabrication tridimensionnelle (201) pendant un temps de stratification et de fabrication,
dans lequel la sélection et l'agencement sont basés sur la position d'accumulation de chaleur prédite et la quantité d'accumulation de chaleur prédite,
un générateur de modèle de fabrication tridimensionnelle (404) configuré pour générer un nouveau modèle de fabrication tridimensionnelle par l'ajout, au modèle de fabrication tridimensionnelle (201), du modèle de structure de dissipation de chaleur sélectionné et agencé (202, 231 ; 522), et
un générateur de données de stratification et de fabrication (312) configuré pour générer de nouvelles données de stratification et de fabrication à partir du nouveau modèle de fabrication tridimensionnelle généré.

2. Appareil de traitement d'informations (310) comprenant :
un dispositif d'acquisition (316) configuré pour acquérir des données (511) d'un modèle de fabrication tridimensionnelle (201 ; 801) utilisé par un appareil de fabrication (320) pour la stratification et la fabrication d'un objet de fabrication tridimensionnelle (203 ; 1301),
un dispositif d'ajout de modèle de structure de dissipation de chaleur (915) comprenant :
- un dispositif de prédiction d'accumulation de chaleur (901) configuré pour prédire un état d'accumulation de chaleur dans un objet tridimensionnel fabriqué sur la base des données acquises,
- une base de données de modèles combinés de structure de dissipation de chaleur (902) stockant une pluralité de modèles combinés de structure de dissipation de chaleur,
dans lequel chaque modèle est obtenu par la combinaison d'un polyèdre prédéterminé ayant un volume prédéterminé et d'un modèle de structure de dissipation de chaleur ajouté sur une surface prédéterminée du polyèdre prédéterminé,
- une unité de sélection et d'agencement de modèle de structure de dissipation de chaleur (903) configurée pour sélectionner un modèle combiné de structure de dissipation de chaleur à partir de la base de données de modèles combinés de structure de dissipation de chaleur (902) en correspondance avec la prédiction d'accumulation de chaleur par le dispositif de prédiction d'accumulation de chaleur (901),
- dans lequel le traitement du dispositif de prédiction d'accumulation de chaleur et de l'unité de sélection et d'agencement de modèle de structure de dissipation de chaleur sont exécutés collectivement sous la forme d'un traitement, dans lequel le traitement est configuré
pour sélectionner, à partir de la pluralité de modèles combinés de structure de dissipation de chaleur, un modèle combiné de structure de dissipation de chaleur dont le polyèdre prédéterminé est le même qu'un volume identifié contenu dans le modèle acquis, et pour remplacer le volume identifié contenu dans le modèle de fabrication tridimensionnelle par le polyèdre prédéterminé sélectionné, de façon à ajouter des données d'un modèle de structure de dissipation de chaleur à partir du modèle combiné de structure de dissipation de chaleur sélectionné, aux données acquises du modèle de fabrication tridimensionnelle,
et
- un générateur de modèle de fabrication tridimensionnelle (404) configuré pour générer un nouveau modèle de fabrication tridimensionnelle par l'ajout, au modèle de fabrication tridimensionnelle (201), du modèle de structure de dissipation de chaleur sélectionné et agencé (202, 231 ; 522), et
- un générateur de données de stratification et de fabrication (312) configuré pour générer de nouvelles données de stratification et de fabrication à partir du nouveau modèle de fabrication tridimensionnelle généré.

3. Appareil de traitement d'informations selon l'une quelconque des revendications 1 ou 2, dans lequel ledit générateur de données est en outre configuré pour générer les données du nouveau modèle de fabrication tridimensionnelle avec le modèle de structure de dissipation de chaleur s'étendant obliquement vers le bas à partir d'une surface du modèle de fabrication tridimensionnelle.

4. Appareil de traitement d'informations selon l'une quelconque des revendications 1 à 3, dans lequel le modèle de structure de dissipation de chaleur inclut au moins un modèle de structure, et une taille de l'au moins un modèle de structure, un numéro de l'au moins un modèle de structure, et un intervalle entre l'au moins un modèle de structure correspond à une géométrie du modèle de fabrication tridimensionnelle.

5. Appareil de traitement d'informations selon l'une quelconque des revendications 1 à 4, le modèle de structure de dissipation de chaleur étant ajouté à une position à laquelle le modèle structurel de dissipation de chaleur est apte à être supprimé du modèle de fabrication tridimensionnelle après que le modèle de fabrication tridimensionnelle a été fabriqué.

6. Appareil de traitement d'informations selon la revendication 5, dans lequel une section transversale d'une partie au niveau de laquelle le modèle de structure de dissipation de chaleur est ajouté au modèle de fabrication tridimensionnelle est plus étroite qu'une section transversale du modèle de structure de dissipation de chaleur.

7. Appareil de traitement d'informations selon l'une quelconque des revendications 1 à 6, comprenant en outre :
un émetteur de données configuré pour émettre les données du nouveau modèle de fabrication tridimensionnelle avec le modèle de structure de dissipation de chaleur vers l'appareil de fabrication pour la stratification et la fabrication du nouveau modèle de fabrication tridimensionnelle.

8. Appareil de traitement d'informations selon l'une quelconque des revendications 1 à 7, comprenant en outre :
une unité d'apprentissage configurée pour évaluer le modèle de structure de dissipation de chaleur sur la base des données acquises du modèle de fabrication tridimensionnelle, les données générées du nouveau modèle de fabrication tridimensionnelle avec le modèle de structure de dissipation de chaleur, et des données de mesure d'un résultat stratifié et fabriqué du nouveau modèle de fabrication tridimensionnelle,
dans lequel ledit générateur de données est en outre configuré pour déterminer un modèle de structure de dissipation de chaleur en considérant en outre un résultat évalué par ladite unité d'apprentissage.

9. Procédé pour la génération d'une structure pour une dissipation de chaleur d'un modèle de fabrication tridimensionnelle, le procédé comprenant :
l'acquisition de données (511) d'un modèle de fabrication tridimensionnelle (201) utilisé par un appareil de fabrication (320) pour la stratification et la fabrication d'un objet de fabrication tridimensionnelle (203),
la prédiction d'un état d'accumulation de chaleur (513 ; 521) dans l'objet de fabrication tridimensionnelle (203), à l'aide d'une table de prédiction d'accumulation de chaleur (510), dans lequel l'état d'accumulation de chaleur prédit (513 ; 521) inclut une position d'accumulation de chaleur et une quantité d'accumulation de chaleur basées sur une forme (512) du modèle de fabrication tridimensionnelle (201) devant être stratifié et fabriqué à partir des données (511) du modèle de fabrication tridimensionnelle (201)
le stockage d'une pluralité de modèles de structure de dissipation de chaleur (202, 231 ; 522) associés chacun à une prédiction d'accumulation de chaleur et à une quantité de dissipation de chaleur prédite,
la sélection et l'agencement d'un modèle de structure de dissipation de chaleur (202, 231 ; 522) à partir de la pluralité de modèles de structure de dissipation de chaleur (202, 231 ; 522) pour réaliser une dissipation de chaleur sur le modèle de fabrication tridimensionnelle (201) à partir d'une partie stratifiée sur le modèle de fabrication tridimensionnelle (201) pendant un temps de stratification et de fabrication,
dans lequel la sélection et l'agencement sont basés sur la position d'accumulation de chaleur prédite et la quantité d'accumulation de chaleur prédite,
la génération d'un nouveau modèle de fabrication tridimensionnelle par l'ajout, au modèle de fabrication tridimensionnelle (201), du modèle de structure de dissipation de chaleur sélectionné et agencé (202, 231 ; 522), et
la génération de nouvelles données de stratification et de fabrication à partir du nouveau modèle de fabrication tridimensionnelle généré.

10. Procédé pour la génération d'une structure pour une dissipation de chaleur d'un modèle de fabrication tridimensionnelle, le procédé comprenant :
l'acquisition de données (511) d'un modèle de fabrication tridimensionnelle (201 ; 801) utilisé par un appareil de fabrication (320) pour la stratification et la fabrication d'un objet de fabrication tridimensionnelle (203 ; 1301),
la prédiction d'un état d'accumulation de chaleur dans un objet tridimensionnel fabriqué sur la base des données acquises,
le stockage d'une pluralité de modèles combinés de structure de dissipation de chaleur,
dans lequel chaque modèle est obtenu par la combinaison d'un polyèdre prédéterminé ayant un volume prédéterminé et d'un modèle de structure de dissipation de chaleur ajouté sur une surface prédéterminée du polyèdre prédéterminé,
la sélection d'un modèle combiné de structure de dissipation de chaleur à partir de la base de données de modèles combinés de structure de dissipation de chaleur (902) en correspondance avec la prédiction d'accumulation de chaleur par le dispositif de prédiction d'accumulation de chaleur (901),
dans lequel le traitement de la prédiction d'accumulation de chaleur et de la sélection et l'agencement de modèle de structure de dissipation de chaleur sont exécutés collectivement comme un seul traitement, dans lequel le traitement comprend
la sélection, à partir de la pluralité de modèles combinés de structure de dissipation de chaleur, d'un modèle combiné de structure de dissipation de chaleur dont le polyèdre prédéterminé est le même qu'un volume identifié contenu dans le modèle acquis, et le remplacement du volume identifié contenu dans le modèle de fabrication tridimensionnelle par le polyèdre prédéterminé sélectionné, de façon à ajouter des données d'un modèle de structure de dissipation de chaleur à partir du modèle combiné de structure de dissipation de chaleur sélectionné, aux données acquises du modèle de fabrication tridimensionnelle,
et
la génération d'un nouveau modèle de fabrication tridimensionnelle par l'ajout, au modèle de fabrication tridimensionnelle (201), du modèle de structure de dissipation de chaleur sélectionné et agencé (202, 231 ; 522), et
la génération de nouvelles données de stratification et de fabrication à partir du nouveau modèle de fabrication tridimensionnelle généré.

11. Programme pour la génération d'une structure pour une dissipation de chaleur d'un modèle de fabrication tridimensionnelle, le programme, lorsqu'il est exécuté par un ordinateur, amène l'ordinateur à exécuter un procédé selon la revendication 9 ou la revendication 10.

12. Système de fabrication tridimensionnelle comprenant l'appareil de traitement d'informations selon l'une quelconque des revendications 1 à 8, le système comprenant en outre :
une unité de stratification et de fabrication configurée pour stratifier et fabriquer le nouveau modèle de fabrication tridimensionnelle avec le modèle structurel de dissipation de chaleur conformément aux données du nouveau modèle de fabrication tridimensionnelle générées par ledit générateur de données de l'appareil de traitement d'informations.

13. Procédé pour la fabrication d'un modèle de fabrication tridimensionnelle selon le procédé défini selon la revendication 9 ou 10, comprenant en outre :
la stratification et la fabrication du nouveau modèle de fabrication tridimensionnelle avec le modèle structurel de dissipation de chaleur conformément aux données générées du nouveau modèle de fabrication tridimensionnelle.
